# EUROPEAN PATENT APPLICATION

(11) **EP 4 343 928 A1**
(43) Date of publication of application: **27.03.2024**
(21) Application number: 22804483.0
(22) Date of filing: 15.04.2022
(51) Int. Cl.: H01M 10/6568, H01M 10/613, H01M 10/625, H01M 10/651, H01M 10/653, H01M 10/6556

(54) **COOLING STRUCTURE, BATTERY UNIT, AND MANUFACTURING METHOD FOR COOLING STRUCTURE**

(30) Priority: 20.05.2021 JP 2021085197
(71) Applicant: NIPPON STEEL CORPORATION, Chiyoda-ku Tokyo 100-8071 (JP)
(72) Inventor: MATSUI, Sho, Tokyo 100-8071 (JP); KODAMA, Shinji, Tokyo 100-8071 (JP); MIYAKE, Kyohei, Tokyo 100-8071 (JP); MIKAZUKI, Yutaka, Tokyo 100-8071 (JP); OKE, Takashi, Tokyo 100-8071 (JP); NORITA, Katsunari, Tokyo 100-8071 (JP)
(74) Representative: Zimmermann & Partner Patentanwälte mbB
(86) International application number: PCT/JP2022/017939
(87) International publication number: WO 2022/244569

(57) **Abstract**

A cooling structure according to an aspect of the present invention includes a press forming member including a groove part and a bank part provided around the groove part, a flow path upper lid forming a flat cooling surface, and a laser weld forming a flow path through which a cooling liquid is capable of flowing, in which the press forming member and the flow path upper lid are plated steel sheets including a Zn-based plating and an inorganic film or a resin film provided as a chemical conversion coating film, the inorganic film contains a Si-based component or a Zr-based component in an amount of 50 mass% or more, the flow path has a parallel flow path portion, in a part or the whole of the parallel flow path portion, an interval between adjacent partial flow paths is 20 mm or less, and the ratio of a length of a region in which a blow hole and a pit are formed is 0.2 or less.

## Description

### [Technical Field of the Invention]

The present invention relates to a cooling structure, a battery unit, and a manufacturing method of the cooling structure.

The present application claims priority based on Japanese Patent Application No. 2021-085197 filed in Japan on May 20, 2021, the contents of which are incorporated herein by reference.

### [Related Art]

In order to reduce the amount of carbon dioxide emissions, with respect to automobiles, electric vehicles (EV) are being developed. In a battery box of an EV, it is necessary to provide a cooling structure in order to prevent deterioration of a battery due to a temperature rise. Hitherto, air-cooling types have been the mainstream for a cooling structure, but in recent years, with the increase in capacities of batteries, water-cooling types having a high cooling capacity have increasingly been adopted (for example, Patent Documents 1 to 4). In a water-cooling type battery pack, a water-cooling medium flow path through which cooling water flows is formed outside the battery pack.

### [Citation List]

### [Patent Document]

[Patent Document 1]
   Japanese Unexamined Patent Application, First Publication No. 2020-107443
[Patent Document 2]
   Japanese Patent No. 6125624
[Patent Document 3]
   Japanese Unexamined Patent Application, First Publication No. 2012-17954
[Patent Document 4]
   Japanese Unexamined Patent Application, First Publication No. 2021-64448
[Patent Document 5]
   Japanese Unexamined Patent Application, First Publication No. 2001-276990

### [Summary of Invention]

### [Problems to be Solved by the Invention]

The outer wall portion and the cooling structure of the water-cooling type battery pack are often made of aluminum having high corrosion resistance to a cooling liquid. However, aluminum has a problem in terms of cost. In addition, since aluminum is soft, it is difficult to reduce the weight of the outer wall by thinning the outer wall while securing the outer wall strength in a cooling structure formed of an aluminum plate. When the material of these members is a steel sheet, it is possible to provide a water-cooling type battery pack at low cost and reduce the weight thereof.

A long-life coolant (LLC) aqueous solution containing an organic component flows as a cooling liquid in the water-cooling medium flow path. Therefore, the member water-cooling medium flow path is required to have corrosion resistance against a cooling liquid. In addition, since the battery pack and the cooling structure are disposed on the bottom surface of the automobile, the battery pack and the cooling structure are exposed to an external environment. Therefore, the members constituting the battery pack and the cooling structure are required to have a corrosion resistance equivalent to that of the suspension parts of the automobile. Hereinafter, corrosion resistance to a cooling liquid is referred to as cooling liquid corrosion resistance or inner surface corrosion resistance, and corrosion resistance to an external environment is referred to as outer surface corrosion resistance. In addition, when "corrosion resistance", is simply referred to, this refers to both cooling liquid corrosion resistance and outer surface corrosion resistance.

Plating is one of means for enhancing corrosion resistance of a steel sheet. For example, by forming plating such as Zn-based plating on the surface of the steel sheet, both cooling liquid corrosion resistance and outer surface corrosion resistance can be enhanced.

On the other hand, as a matter of course, the cooling structure is required to have high cooling efficiency. In addition, liquid tightness of the flow path is also required to maintain cooling efficiency and suppress LLC leakage. However, as of yet, there have been almost no examples of a cooling structure in which a flow path is formed using a plated steel sheet, and therefore, a method for joining plated steel sheets has not been studied.

Spot welding is usually used as means for firmly joining plated steel sheets. However, since spot welding is point joining, it is difficult to ensure liquid tightness of the flow path. Although it is possible to secure the liquid tightness of the spot weld using a sealer, the sealer may be deteriorated by the LLC. Therefore, in manufacturing the cooling structure, a joining method capable of securing liquid tightness of the flow path while maintaining corrosion resistance is also required.

In the technique of Patent Document 3, a cooler is manufactured by brazing an aluminum-plated steel sheet. However, the technique of Patent Document 3 is assumed to be applied only to a small device, and it is difficult to cope with coolers of various sizes. Further, in Patent Document 3, it is a problem to prevent deformation of the exterior member, and it is difficult to change joining means of the exterior member.

Patent Document 4 discloses a manufacturing method of a battery case using friction stir welding (FSW). According to this document, a blow hole is not generated in the FSW. However, the FSW cannot be applied to joining of a narrow plane region or a curved surface region. In the technique of Patent Document 3, it is difficult to narrow the flow path interval of the cooling structure to improve the cooling efficiency.

Patent Document 5 discloses a lap laser welding structure of a plated steel sheet that suppresses the occurrence of blow holes using an adhesive as a spacer. However, the technique of Patent Document 5 does not assume a corrosive environment exposed to the LLC.

In view of the above circumstances, an object of the present invention is to provide a cooling structure having high cooling efficiency, excellent liquid tightness of a flow path, and further having high cooling liquid corrosion resistance and outer surface corrosion resistance, a battery unit, and a manufacturing method of the cooling structure.

### [Means for Solving the Problem]

The gist of the present invention is as follows.

(1) A cooling structure according to an aspect of the present invention includes a press forming member having a groove part and a bank part provided around the groove part, a flow path upper lid which is a flat sheet overlapped at a position covering the groove part of the press forming member and forms a flat cooling surface, and a laser weld which joins opposing surfaces of the flow path upper lid and the bank part to form a flow path through which a cooling liquid is capable of flowing, in which the press forming member and the flow path upper lid are plated steel sheets each including a base steel sheet, a Zn-based plating provided on a surface of the base steel sheet, and an inorganic film or a resin film provided as a chemical conversion coating film on a surface of the Zn-based plating, the inorganic film contains a Si-based component or a Zr-based component in a proportion of 50 mass% or more, the flow path includes a parallel flow path portion in which a plurality of partial flow paths extending along a first direction are arranged in a second direction orthogonal to the first direction, in a part or all of the parallel flow path portions, an interval between the adjacent partial flow paths is 20 mm or less, and the ratio of the length of a region in which a blow hole and a pit are formed to a total length of the laser weld facing the flow path is 0.2 or less.
(2) In the cooling structure described in (1) above, in the parallel flow path portion, an interval between the adjacent partial flow paths may be 0.8 to 15 mm.
(3) In the cooling structure described in (1) of (2) above, the width of the partial flow path may be 6 to 60 mm.
(4) In the cooling structure described in (1) or (2) above, the width of the partial flow path may be 6 to 20 mm.
(5) In the cooling structure described in any one of (1) to (4) above, a gap between the press forming member and the flow path upper lid may be 0.03 mm or more at a periphery of a weld metal included in the laser weld.
(6) The cooling structure described in (5) above may further include a spacer having a thickness of 0.03 mm or more disposed between the press forming member and the flow path upper lid at the periphery of the weld metal included in the laser weld.
(7) In the cooling structure described in (6) above, the spacer may be a projection formed by deforming the flow path upper lid or the press forming member.
(8) The cooling structure described in (5) above may further include a spot weld which joins the flow path upper lid and the press forming member to each other at the laser weld or in the vicinity of the laser weld.
(9) In the cooling structure described in any one of (1) to (8) above, a cross-sectional shape of the bank part may be substantially an arc, and the radius of curvature of the bank part at a contact section between the flow path upper lid and the bank part may be 15 mm or less.
(10) In the cooling structure described in any one of (1) to (9) above, the plated steel sheet forming the press forming member and the flow path upper lid may have a sheet thickness of 0.3 to 1.2 mm.
(11) In the cooling structure described in any one of (1) to (10) above, the laser weld may include a flow path outer edge weld surrounding all the flow paths, and a start position and an end position of the laser weld may be excluded from the flow path outer edge weld.
(12) In the cooling structure described in any one of (1) to (11) above, a start position and an end position of the laser weld may be omitted from the cooling structure.
(13) In the cooling structure described in any one of (1) to (12) above, the bead height of the laser weld in the flow path upper lid may be 0.3 mm or less.
(14) A battery unit according to another aspect of the present invention includes a battery cell, a battery pack in which the battery cell is housed, and the cooling structure described in any one of (1) to (13) above, in which the flow path upper lid of the cooling structure is joined to the battery pack.
(15) A battery unit according to another aspect of the present invention includes a battery cell, a battery pack in which the battery cell is housed, and the cooling structure described in any one of (1) to (13) above, in which the flow path upper lid of the cooling structure is the battery pack.
(16) A manufacturing method of a cooling structure according to another aspect of the present invention includes press-forming a steel sheet to obtain a press forming member having a groove part and a bank part provided around the groove part, and overlapping a flow path upper lid which is a flat sheet at a position covering the groove part of the press forming member and laser welding the flow path upper lid and the bank part of the press forming member to obtain a laser weld which forms a flow path through which a cooling liquid is capable of flowing, in which the press forming member and the flow path upper lid are plated steel sheets each including a base steel sheet, a Zn-based plating provided on a surface of the base steel sheet, and an inorganic film or a resin film provided as a chemical conversion coating film on a surface of the Zn-based plating, the inorganic film contains a Si-based component or a Zr-based component in a proportion of 50 mass% or more, the flow path includes a parallel flow path portion in which a plurality of partial flow paths extending along a first direction are arranged in a second direction orthogonal to the first direction, in a part or all of the parallel flow path portions, an interval between the adjacent partial flow paths is 20 mm or less, and the ratio of the length of a region in which a blow hole and a pit are formed to a total length of the laser weld facing the flow path is 0.2 or less.
(17) In the manufacturing method of the cooling structure described in (16) above, before the laser welding, a spacer having a thickness of 0.03 mm or more may be disposed between the press forming member and the flow path upper lid at a portion to be subjected to the laser welding or in the vicinity of the portion to be subjected to the laser welding, so that a gap between the press forming member and the flow path upper lid at the portion to be subjected to the laser welding or in the vicinity of the portion to be subjected to the laser welding may be 0.03 mm or more.
(18) In the manufacturing method of the cooling structure described in (17) above, the spacer may be a projection formed by deforming the flow path upper lid or the press forming member.
(19) In the manufacturing method of the cooling structure described in (16) above, before the laser welding, the press forming member and the flow path upper lid may be spot-welded at a portion to be subjected to the laser welding or in the vicinity of the portion to be subjected to the laser welding, so that a gap between the press forming member and the flow path upper lid at the portion to be subjected to the laser welding or in the vicinity of the portion to be subjected to the laser welding may be 0.03 mm or more.

### [Effects of the Invention]

According to the present invention, it is possible to provide a cooling structure having high cooling efficiency, excellent liquid tightness of a flow path, and further having high cooling liquid corrosion resistance and outer surface corrosion resistance, a battery unit, and a manufacturing method of the cooling structure.

### [Brief Description of the Drawings]

FIG. 1 is a cross-sectional view perpendicular to an extending direction of a partial flow path of a cooling structure in which a cross-sectional shape of a press forming member is rectangular.
FIG. 2A is a plane view of the cooling structure in which a flow path connecting portion and a partial flow path are orthogonal to each other as viewed from a press forming member side.
FIG. 2B is a plane view of the cooling structure in which a flow path connecting portion has a branch structure as viewed from a press forming member side.
FIG. 3 is a cross-sectional view perpendicular to the extending direction of the partial flow path of the cooling structure in which the cross-sectional shape of the press forming member is corrugated.
FIG. 4 is an enlarged cross-sectional view of the cooling structure showing an interval D between partial flow paths.
FIG. 5A is a schematic view of a blow hole.
FIG. 5B is a schematic view of a pit.
FIG. 5C is a schematic view of a state in which a vaporized Zn-based plating is released through a gap between plated steel sheets.
FIG. 5D is a schematic view showing a method of forming a gap between plated steel sheets using projections.
FIG. 5E is a schematic view showing a method of forming the gap between the plated steel sheets using a spot weld.
FIG. 6A is a perspective view of a cooling structure in which a middle portion of a laser weld is disposed between a flow path and a start position and an end position of the laser weld.
FIG. 6B is a perspective view of the cooling structure in which the start position and the end position of the laser weld are omitted.
FIG. 7A is a schematic view of a cooling structure in which the start position and the end position of the laser weld are omitted from a flow path outer edge weld.
FIG. 7B is a schematic view of a cooling structure in which the start position and the end position of the laser weld are omitted from the flow path outer edge weld.
FIG. 8A is a perspective view of a battery unit.
FIG. 8B is a cross-sectional view of a battery unit using a battery pack as a flow path upper lid.
FIG. 8C is a cross-sectional view of the battery unit in which the battery pack and the flow path upper lid are joined.
FIG. 9A is a perspective view illustrating a state in which a flow path upper lid and a press forming member provided with a projection are overlapped.
FIG. 9B is a perspective view illustrating a state in which the flow path upper lid and the press forming member are spot-welded.
FIG. 10 is a perspective view of a cooling structure of Example 1.
FIG. 11A is a perspective view of a press forming member before laser welding of a cooling structure of Example 2.
FIG. 11B is a perspective view of the flow path upper lid before laser welding of the cooling structure of Example 2.
FIG. 11C is a perspective view of the cooling structure of Example 2.

### [Embodiments of the Invention]

Hereinafter, preferred embodiments of the present invention will be described in detail with reference to the accompanying drawings.

### (1. Cooling structure)

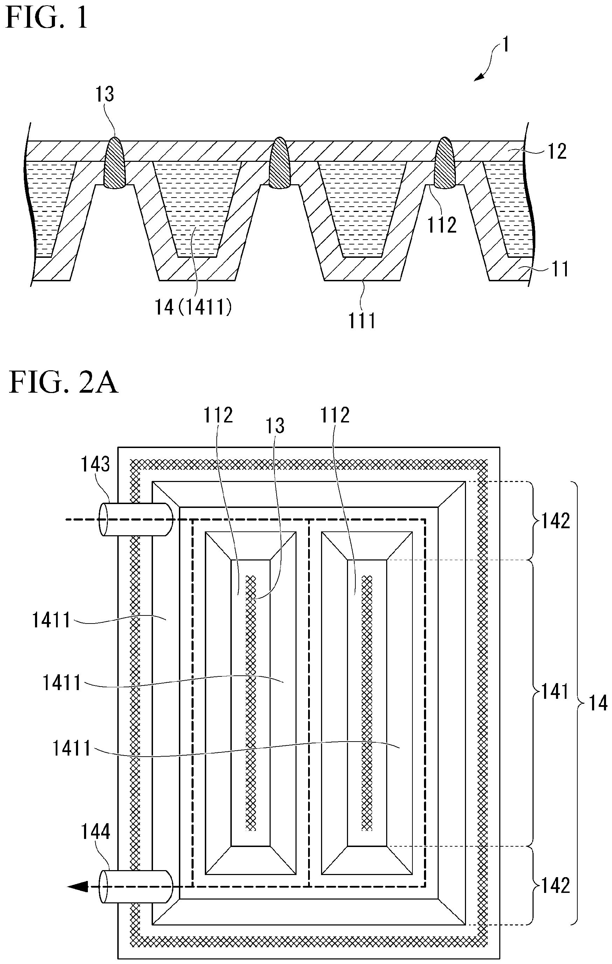

First, a cooling structure according to a first embodiment of the present invention will be described. As illustrated in FIGS. 1 and 2A, a cooling structure 1 according to the present embodiment includes a press forming member 11, a flow path upper lid 12, and a laser weld 13 that joins these components. The laser weld is a joint portion formed of a linear bead (that is, a weld metal). FIG. 1 is a cross-sectional view of the cooling structure 1, and FIG. 2A is a plane view of the cooling structure 1 from the press forming member 11 side.

### (1.1 Outline of cooling structure)

The press forming member 11 is a member obtained by press forming a plated steel sheet, and includes a groove part 111 and a bank part 112 provided around the groove part 111. In FIG. 1, the bottom of the press forming member 11 and the periphery thereof are groove parts 111, and the top portion of the press forming member 11 and the periphery thereof are bank parts 112. The flow path upper lid 12 is a member forming a flat cooling surface, has a flat sheet shape, and is overlapped at a position covering the groove part 111 of the press forming member 11.

### (1.2 Shape of press forming member)

The press forming member 11 and the flow path upper lid 12 are joined by a laser weld 13. Specifically, the laser weld 13 joins opposing surfaces of the flow path upper lid 12 and the bank part 112 of the press forming member 11. As a result, the flow path upper lid 12 and the groove part 111 form a flow path 14 through which the cooling liquid is capable of flowing. As indicated by a broken line in FIG. 2A, in the flow path 14, any cooling liquid such as LLC introduced from a cooling liquid inlet 143 can flow to a cooling liquid outlet 144. Accordingly, it is possible to cool the flow path upper lid 12 as a cooling surface and an arbitrary object in contact with the flow path upper lid 12. In the flow path illustrated in FIG. 2A, the plurality of partial flow paths 1411 extending along the first direction includes a parallel flow path portion 141 arranged in the second direction orthogonal to the first direction, and a flow path connecting portion 142 that communicates these partial flow paths 1411. The first direction is, for example, a longitudinal direction or a lateral direction of the cooling structure 1. A specific configuration of the flow path 14 will be described later.

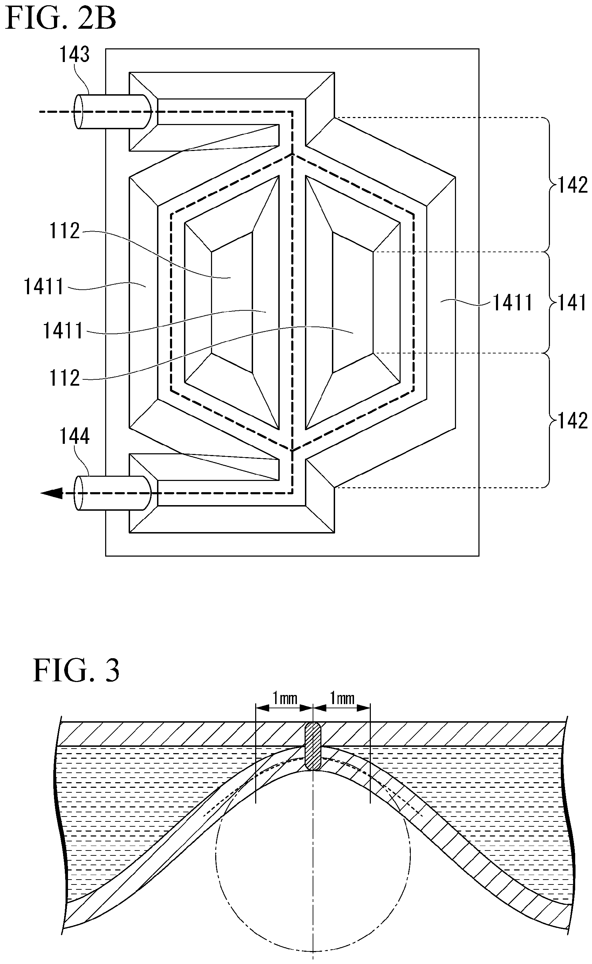

Shapes of the bank part 112 and the groove part 111 are not particularly limited. In the press forming member 11 illustrated in FIG. 1, the cross sections of the bank part 112 and the groove part 111 are substantially rectangular (trapezoidal). On the other hand, the cross-sectional shape of one or both of the bank part 112 and the groove part 111 of the press forming member 11 may be a partially circular shape or a substantially circular arc shape. As illustrated in FIG. 3, the press forming member 11 in which the cross-sectional shapes of both the bank part 112 and the groove part 111 are partially circular or substantially arc is referred to as a corrugated plate. In a case where the press forming member 11 is a corrugated plate, it is possible to obtain an effect of further suppressing the generation of blow holes and pits to be described later.

In a case where the cross-sectional shape of the bank part 112 is substantially an arc, the radius of curvature of the bank part 112 at the contact section between the flow path upper lid 12 and the bank part 112, that is, at the laser weld 13 may be 15 mm or less, 13 mm or less, or 10 mm or less. As the radius of curvature of the bank part 112 in the laser weld 13 is smaller, the width W of the partial flow path 1411 is widened, and the cooling efficiency of the cooling structure 1 is further enhanced.

The radius of curvature of the bank part 112 at the contact section between the flow path upper lid 12 and the bank part 112 is measured in a cross section of the partial flow path 1411 parallel to the second direction orthogonal to the first direction that is the extending direction of the partial flow path 1411 and perpendicular to the surface of the flow path upper lid 12. As illustrated in FIG. 3, in this cross section, the radius of a circle R including a total of three points including the center of the weld metal and two points 1 mm away from the center of the weld metal along the second direction at the center of the bank part 112 in the sheet thickness direction is the radius of curvature of the bank part 112 at the contact section between the flow path upper lid 12 and the bank part 112.

### (1.3 Configuration of plated steel sheet)

The press forming member 11 and the flow path upper lid 12 are plated steel sheets having a base steel sheet and Zn-based plating provided on the surface of the base steel sheet. The configuration of the Zn-based plated steel sheet is not particularly limited, but a preferred configuration is as follows.

The sheet thickness of the plated steel sheet forming the press forming member 11 and the flow path upper lid 12 may be 0.3 mm or more. By setting the sheet thickness to 0.3 mm or more, the press formability and the rigidity of the cooling structure 1 can be further improved. The sheet thickness of the plated steel sheet forming the press forming member 11 and the flow path upper lid 12 may be 0.4 mm or more, 0.6 mm or more, or 0.8 mm or more. On the other hand, the sheet thickness of the plated steel sheet forming the press forming member 11 and the flow path upper lid 12 may be 1.2 mm or less. By setting the sheet thickness of the press forming member 11 to 1.2 mm or less, it is easier to bring the press forming member 11 into close contact with the flow path upper lid 12, and the liquid tightness of the flow path is further improved. By setting the sheet thickness of the flow path upper lid 12 to 1.2 mm or less, the cooling efficiency of the cooling structure 1 can be further improved. The sheet thicknesses of the press forming member 11 and the flow path upper lid 12 may be 1.1 mm or less, 1.0 mm or less, or 0.8 mm or less. The press forming member 11 and the flow path upper lid 12 may have different sheet thicknesses. Since the cooling efficiency increases as the sheet thickness decreases, it is preferable that the flow path upper lid 12 is thin.

### (1.4 Configuration of base steel sheet of plated steel sheet)

The base steel sheet of the plated steel sheet forming the press forming member 11 and the flow path upper lid 12 is not particularly limited. For example, in order to further increase the rigidity of the cooling structure 1, the base steel sheet of the flow path upper lid 12 may be a high strength steel sheet having a tensile strength of 980 MPa or more. On the other hand, in order to further enhance the press formability, the base steel sheet of the press forming member 11 may be a soft steel sheet having a tensile strength of about 270 MPa, for example, SPCC. Various forms according to the shape and application of the cooling structure 1 can be applied to the base steel sheet forming the press forming member 11 and the flow path upper lid 12. Examples of the base steel sheet include IF steel to which Ti, Nb, B, or the like is added, Al-k steel, Cr-added steel, stainless steel, high tensile strength steel sheets, low-carbon steel, medium-carbon steel, high-carbon steel, alloy steel, and the like.

### (1.5 Configuration of plating of plated steel sheet)

Examples of the Zn-based plated steel sheet forming the press forming member 11 and the flow path upper lid 12 include a galvanized steel sheet, a zinc-nickel plated steel sheet, a zinc-iron plated steel sheet, a zinc-chromium plated steel sheet, a zinc-aluminum-plated steel sheet, a zinc-titanium plated steel sheet, a zinc-magnesium plated steel sheet, a zinc-manganese plated steel sheet, a zinc-aluminum (Al)-magnesium (Mg) plated steel sheet, and a zinc-aluminum-magnesium-silicon plated steel sheet. Furthermore, it is also possible to use a Zn-based plated steel sheet in which a small amount of different metal elements or impurities such as cobalt, molybdenum, tungsten, nickel, titanium, chromium, aluminum, manganese, iron, magnesium, lead, bismuth, antimony, tin, copper, cadmium, and arsenic are contained in these plated layers, or an inorganic substance such as silica, alumina, or titania is dispersed. Furthermore, the above-described plating can be combined with other types of plating, and for example, multilayer plating combined with iron plating, iron-phosphorus plating, nickel plating, cobalt plating, or the like is also applicable. The plating method is not particularly limited, and may be any known method such as an electro plating method, a hot-dip plating method, a vapor deposition plating method, a dispersion plating method, or a vacuum plating method. The film thickness of the Zn-based plating is not particularly limited, but may be, for example, within a range of 4 to 25 µm. The film thickness of the Zn-based plating may be 5 µm or more, 8 µm or more, or 10 µm or more. The film thickness of the Zn-based plating may be 22 µm or less, 20 µm or less, or 18 µm or less.

Furthermore, an inorganic film or a resin film is formed as a chemical conversion coating film on the surface of the Zn-based plated steel sheet. The inorganic film contains one or both of a Si-based component and a Zr-based component as a main component (for example, 50 mass% or more as mass%). In a case where both the Si-based component and the Zr-based component are contained in the chemical conversion coating film, the total amount of these components may be 50 mass% or more. In addition, the inorganic film may contain an organic component. Hereinafter, the "main component" of the chemical conversion coating film means a component having a proportion of 50 mass% or more in the chemical conversion coating film.

The inorganic film or the resin film preferably has conductivity. In this case, weldability or electrodeposition coating properties of the Zn-based plated steel sheet can be improved. Furthermore, the inorganic film is preferably composed of a compound phase containing one or more of a Si-O bond, a Si-C bond, and a Si-OH bond. In addition, an acrylic resin described later is preferably contained in the compound phase. When these requirements are satisfied, adhesion of the chemical conversion coating film can be enhanced, so that outer surface corrosion resistance and cooling liquid corrosion resistance of a processed portion of the Zn-based plated steel sheet can be enhanced. In addition, the inorganic film preferably contains at least one or more of a V component, a P component, and a Co component as an antirust component. The antirust component of the inorganic film is preferably one or more of vanadium oxide, phosphoric acid, and Co nitrate. In addition, the thickness of the inorganic film is preferably more than 0 µm and 1.5 µm or less. In this case, the conductivity of adhesion of the chemical conversion coating film described above can be further enhanced.

The resin film preferably contains a resin, an antirust pigment, and a conductive pigment. Furthermore, the resin film preferably contains any one or more of metal particles, intermetallic compound particles, conductive oxide particles, and conductive non-oxide ceramic particles as the conductive pigment, and the conductive pigment preferably has a powder resistivity of 185 × 10⁻⁶ Qcm or less at 25°C, and preferably contains any one or more selected from the group consisting of Zn, Si, Zr, V, Cr, Mo, Mn, Fe, and W as a constituent element. Furthermore, the resin film preferably contains the conductive pigment in a proportion of 1.0 mass% or more and 30 mass% or less. Furthermore, an average thickness of the resin film is preferably 1.0 µm or more and 15 µm or less. Furthermore, an average grain size of the conductive pigment is preferably 0.5 times or more and 1.5 times or less the average thickness of the resin film. When any one or more of these requirements are satisfied, outer surface corrosion resistance and cooling liquid corrosion resistance of the Zn-based plated steel sheet can be further enhanced.

Examples of the chemical conversion coating film include those listed in Japanese Patent No. 4776458, Japanese Patent No. 5336002, Japanese Patent No. 6191806, Japanese Patent No. 6263278, PCT International Publication No. WO2020/202461, and Japanese Patent No. 4084702. Therefore, the chemical conversion coating films listed in these publications can be suitably used as the chemical conversion coating film of the present embodiment. Here, an outline of the chemical conversion coating film will be described.

A first example of the chemical conversion coating film is an example of an inorganic film, and is a chemical conversion coating film containing an organosilicon compound (silane coupling agent) as a main component. The organosilicon compound is obtained by blending a silane coupling agent (A) containing one amino group in the molecule and a silane coupling agent (B) containing one glycidyl group in the molecule at a solid content mass ratio [(A)/(B)] of 0.5 to 1.7. The organosilicon compound contains, in the molecule, two or more functional groups (a) represented by the formula - SiR¹R²R³ (wherein R¹, R², and R³ each independently represent an alkoxy group or a hydroxyl group, and at least one represents an alkoxy group) and one or more of at least one type of hydrophilic functional groups (b) selected from a hydroxyl group (which is separate from those that can be contained in the functional group (a)) and an amino group, and has an average molecular weight of 1000 to 10000.

In the first example, the Zr-based component is contained in the chemical conversion coating film as zirconium hydrofluoric acid. The chemical conversion coating film contains the V component as a vanadium compound, the P component as phosphoric acid, and the Co component as at least one selected from the group consisting of cobalt sulfate, cobalt nitrate, and cobalt carbonate. Examples of the vanadium compound include vanadium pentoxide V₂O₅, metavanadic acid HVO₃, ammonium metavanadate, sodium metavanadate, vanadium oxytrichloride VOCl₃, vanadium trioxide V₂O₃, vanadium dioxide VO₂, vanadium oxide, vanadium oxysulfate VOSO₄, vanadium oxyacetylacetonate VO(OC(=CH₂)CH₂COCH₃))₂, vanadium acetylacetonate V(OC(=CH₂)CH₂COCH₃))₃, vanadium trichloride VCl₃, and phosphovanadomolybdic acid. In addition, a pentavalent vanadium compound reduced to tetravalent to divalent one with an organic compound having at least one functional group selected from the group consisting of a hydroxyl group, a carbonyl group, a carboxylic acid, a primary to tertiary amino group, an amide group, a phosphoric acid group, and a phosphonic acid group can also be used.

A second example of the chemical conversion coating film is an example of an inorganic film, and is a chemical conversion coating film containing an organosilicon compound (silane coupling agent) as a main component. The organosilicon compound has an annular siloxane structure in its structure. Here, the term "annular siloxane bond" refers to an annular structure having a configuration in which Si-O-Si bonds are continuous and composed only of Si and O bonds and having a Si-O repetition number of 3 to 8.

The organosilicon compound is obtained by blending a silane coupling agent (A) containing at least one amino group in the molecule and a silane coupling agent (B) containing at least one glycidyl group in the molecule at a solid content mass ratio [(A)/(B)] of 0.5 to 1.7. It is preferable that the organosilicon compound (W) thus obtained contains, in the molecule, two or more functional groups (a) represented by the formula -SiR¹R²R³ (wherein R¹, R², and R³ each independently represent an alkoxy group or a hydroxyl group, and at least one of R¹, R², and R³ represents an alkoxy group) and one or more of at least one type of hydrophilic functional groups (b) selected from the group consisting of a hydroxyl group (which is separate from hydroxyl groups that can be contained in the functional group (a)) and an amino group, and has an average molecular weight of 1000 to 10000.

In the second example, the Zr-based component is contained in the chemical conversion coating film as a zirconium compound. Examples of the zirconium compound include zirconium hydrofluoric acid, zirconium ammonium fluoride, zirconium sulfate, zirconium oxychloride, zirconium nitrate, and zirconium acetate. Among them, the zirconium compound is more preferably zirconium hydrofluoric acid. When zirconium hydrofluoric acid is used, more excellent corrosion resistance and coatability can be obtained.

The chemical conversion coating film contains the V component as a vanadium compound, the P component as a phosphate compound, and the Co component as at least one selected from the group consisting of cobalt sulfate, cobalt nitrate, and cobalt carbonate. Examples of the vanadium compound include vanadium pentoxide V₂O₅, metavanadic acid HVO₃, ammonium metavanadate, sodium metavanadate, vanadium oxytrichloride VOCl₃, vanadium trioxide V₂O₃, vanadium dioxide VO₂, vanadium oxide, vanadium oxysulfate VOSO₄, vanadium oxyacetylacetonate VO(OC(=CH₂)CH₂COCH₃)₂, vanadium acetylacetonate V(OC(=CH₂)CH₂COCH₃)₃, vanadium trichloride VCl₃, and phosphovanadomolybdic acid. In addition, a pentavalent vanadium compound reduced to tetravalent to divalent one with an organic compound having at least one functional group selected from the group consisting of a hydroxyl group, a carbonyl group, a carboxylic acid, a primary to tertiary amino group, an amide group, a phosphoric acid group, and a phosphonic acid group can also be used.

Examples of the phosphate compound include phosphoric acid, ammonium phosphate, potassium phosphate, and sodium phosphate. Among them, the phosphate compound is more preferably phosphoric acid. When phosphoric acid is used, more excellent corrosion resistance can be obtained.

A third example of the chemical conversion coating film is an example of an inorganic film, and contains an acrylic resin, zirconium, vanadium, phosphorus, and cobalt. More specifically, the chemical conversion coating film contains a particulate acrylic resin (resin particles) and an inhibitor phase. The acrylic resin is preferably a resin containing a polymer of a (meth)acrylic acid alkyl ester, and may be a polymer obtained by polymerizing only a (meth)acrylic acid alkyl ester, or may be a copolymer obtained by polymerizing a (meth)acrylic acid alkyl ester and other monomers. "(Meth)acrylic" means "acrylic" or "methacrylic". The inhibitor phase contains zirconium, vanadium, phosphorus, and cobalt. Zirconium forms a crosslinked structure with the acrylic resin.

A fourth example of the chemical conversion coating film is an example of an inorganic film, and includes a zirconium carbonate compound, an acrylic resin, a vanadium compound, a phosphorus compound, and a cobalt compound. Examples of the zirconium carbonate compound include zirconium carbonate, ammonium zirconium carbonate, potassium zirconium carbonate, and sodium zirconium carbonate, and one or more of these compounds can be used. Among them, zirconium carbonate and ammonium zirconium carbonate are preferable from the viewpoint of excellent corrosion resistance.

The acrylic resin is a resin obtained by copolymerizing monomer components including at least styrene (b1), (meth)acrylic acid (b2), a (meth)acrylic acid alkyl ester (b3), and acrylonitrile (d4), in which an amount of acrylonitrile (b4) is 20 to 38 mass% based on a solid content mass of all monomer components of the resin, and the acrylic resin is a water-soluble resin and an aqueous emulsion resin having a glass transition temperature of -12 to 15°C. That is, the acrylic resin exists in a form of resin particles in the chemical conversion coating film.

Examples of the vanadium compound include divalent to tetravalent vanadium compounds, more specifically, divalent to tetravalent vanadium compounds obtained by reducing pentavalent vanadium compounds such as vanadium pentoxide (V₂O₅), metavanadic acid (HVO₃), ammonium metavanadate, sodium metavanadate, and vanadium oxytrichloride (VOCl₃) with a reducing agent; and vanadium compounds having an oxidation number of 4 to 2 such as vanadium trioxide (V₂O₃), vanadium dioxide (VO₂), vanadium oxysulfate (VOSO₄), vanadium oxyoxalate [VO(COO)₂], vanadium oxyacetylacetonate [VO(OC(CH₃)=CHCOCH₃))₂], vanadium acetylacetonate [V(OC(CH₃)=CHCOCH₃))₃], vanadium trichloride (VCl₃), phosphovanadomolybdic acid {H_{15-X}[PV₁₂₋ₓMoₓO₄₀]·nH₂O (6 < x < 12, n < 30)}, vanadium sulfate (VSO₄·8H₂O), vanadium dichloride (VCl₂), and vanadium oxide (VO).

Examples of the phosphorus compound include inorganic acid anions having an acid group containing phosphorus and organic acid anions having an acid group containing phosphorus. Examples of the inorganic acid anion having an acid group containing phosphorus include inorganic acid anions in which at least one hydrogen atom of an inorganic acid such as orthophosphoric acid, metaphosphoric acid, condensed phosphoric acid, pyrophosphoric acid, tripolyphosphoric acid, tetraphosphoric acid, of hexametaphosphoric acid is liberated, and salts thereof.

Examples of the organic acid anion having an acid group containing phosphorus include organic acid anions in which at least one hydrogen atom of an organic phosphonic acid such as 1-hydroxymethane-1,1-diphosphonic acid, 1-hydroxyethane-1,1-diphosphonic acid, 1-hydroxypropane-1,1-diphosphonic acid, 1-hydroxyethylene-1,1-diphosphonic acid, 2-hydroxyphosphonoacetic acid, aminotri(methylene phosphonic acid), ethylenediamine-N,N,N',N'-tetra(methylene phosphonic acid), hexamethylenediamine-N ,N ,N',N' -tetra(methylene phosphonic acid), diethylenetriamine-N,N,N',N",N"-penta(methylene phosphonic acid), 2-phosphonobutane-1,2,4-tricarboxylic acid, inositol hexaphosphonic acid, or phytic acid; an organic phosphoric acid, or the like is liberated, and salts thereof.

Examples of the cobalt compound include cobalt sulfate, cobalt nitrate, and cobalt carbonate.

A fifth example of the chemical conversion coating film is an example of a resin film, and includes any one or more of metal particles, intermetallic compound particles, conductive oxide particles, and conductive non-oxide ceramic particles as a conductive pigment. The conductive pigment has a powder resistivity of 185 × 10⁻⁶ Qcm or less at 25°C, and contains any one or more selected from the group consisting of Zn, Si, Zr, V, Cr, Mo, Mn, Fe, and W as a constituent element.

Examples of the intermetallic compound include ferrosilicon and ferromanganese. As the conductive oxide particles, for example, a substance having conductivity by doping impurities into a crystal lattice of an oxide (doped conductive oxide) or a type in which a surface of an oxide is modified with a conductive substance can be used. As the former, a generally known substance such as a metal oxide doped with one or more metal elements selected from Al, Nb, Ga, Sn, and the like (for example, Al-doped zinc oxide, Nb-doped zinc oxide, Ga-doped zinc oxide, Sn-doped zinc oxide, and the like) can be used. As the latter, a generally known substance such as zinc oxide or silica obtained by modifying an oxide with conductive SnO₂ can be used. The conductive oxide is preferably a doped conductive oxide, and the doped conductive oxide is preferably an Al-doped zinc oxide.

The conductive non-oxide ceramic particles are composed of ceramics composed of an element or a compound not containing oxygen. Examples of the conductive non-oxide ceramic particles include boride ceramics, carbide ceramics, nitride ceramics, and silicide ceramics. In addition, the boride ceramics, the carbide ceramics, the nitride ceramics, and the silicide ceramics refer to non-oxide ceramics containing boron B, carbon C, nitrogen N, and silicon Si, respectively, as a main non-metallic constituent element, and these generally known non-oxide ceramics containing any one or more selected from the group consisting of Zn, Si, Zr, V, Cr, Mo, Mn, and W can be used. Furthermore, the non-oxide ceramic particles are more preferably the non-oxide ceramics exemplified below from the viewpoint of the presence or absence of an industrial product, stable distribution in domestic and foreign markets, a price, electric resistivity, and the like. For example, particles of Mo₂B, MoB, MoB₂, Mo₂B₅, NbB₂, VB, VB₂, W₂B₅, ZrB₂, Mo₂C, V₂C, VC, WC, W₂C, ZrC, Mo₂N, VN, ZrN, Mo₃Si, Mo₅Si₃, MoSi₂, NbSi₂, Ni₂Si, Ta₂Si, TaSi₂, TiSi, TiSi₂, V₅Si₃, VSi₂, W₃Si, WSi₂, ZrSi, ZrSi₂, CrB, CrB₂, Cr₃C₂, Cr₂N, and CrSi, and particles of a mixture of two or more selected therefrom are more preferable.

A sixth example of the chemical conversion coating film is an example of a resin film, and includes a resin having a urethane bond and conductive particles (conductive pigment). The resin having a urethane bond is an organic resin obtained from a filmforming resin raw material containing (a) a polyester polyol having at least three functional groups, and (b) a blocked product of an organic polyisocyanate or a blocked product of a prepolymer having an NCO group at the terminal obtained by a reaction between an organic polyisocyanate and an active hydrogen compound.

The polyester polyol having at least three functional groups of (a) can be obtained by esterifying a dicarboxylic acid, a glycol, and a polyol having at least three OH groups.

Examples of the dicarboxylic acid used in manufacture of the polyester polyol include aliphatic acids such as succinic acid, succinic anhydride, adipic acid, azelaic acid, sebacic acid, dodecanedioic acid, maleic acid, maleic anhydride, fumaric acid, itaconic acid, and dimer acid; and aromatic and alicyclic acids such as phthalic acid, phthalic anhydride, isophthalic acid, isophthalic acid dimethyl ester, terephthalic acid, terephthalic acid dimethyl ester, 2,6-naphthalenedicarboxylic acid, hexahydrophthalic anhydride, tetrahydrophthalic anhydride, cyclohexanedicarboxylic acid, cyclohexanedicarboxylic acid dimethyl ester, methylhexahydrophthalic anhydride, himic anhydride, and methylhimic anhydride.

Examples of the glycol include aliphatic glycols such as ethylene glycol, diethylene glycol, propylene glycol, 1,3-butylene glycol, 1,4-butylene glycol, dipropylene glycol, 1,5-pentanediol, 1,6-hexanediol, neopentyl glycol, neopentyl glycol ester of hydroxydivaric acid, triethylene glycol, 1,9-nonanediol, 3-methyl-1,5-pentanediol, 2,2,4-trimethyl-1,3-pentanediol, 2-ethyl-1,3-hexanediol, 2,4-diethyl-1,5-pentanediol, polycaprolactone diol, polypropylene glycol, polytetramethylene ether glycol, polycarbonate diol, 2-n-butyl-2-ethyl-1,3-propanediol, and 2,2-diethyl-1,3-propanediol; and aliphatic or aromatic glycols such as cyclohexanedimethanol, cyclohexanediol, 2-methyl-1,1-cyclohexanedimethanol, xylylene glycol, bishydroxyethyl terephthalate, 1,4-bis(2-hydroxyethoxy)benzene, hydrogenated bisphenol A, an ethylene oxide adduct of bisphenol A, and a propylene oxide adduct of bisphenol A.

Examples of the polyol having at least three OH groups include glycerin, trimethylolpropane, trimethylolethane, 1,2,6-hexanetriol, pentaerythritol, diglycerin, and an ethylene oxide adduct, a propion oxide adduct, or an ε-caprolactane adduct using these polyols as an initiator.

Examples of the blocked product of (b) include compounds having at least two NCO groups, for example, aliphatic diisocyanates such as trimethylene diisocyanate, tetramethylene diisocyanate, hexamethylene diisocyanate, pentamethylene diisocyanate, 1,2-propylene diisocyanate, 2,3-butylene diisocyanate, 1,3-butylene diisocyanate, 2,4,4-or 2,2,4-trimethylhexamethylene diisocyanate, dodecamethylene diisocyanate, and 2,6-diisocyanatomethylcaproate; cycloalkylene-based diisocyanates such as 1,3-cyclopentane diisocyanate, 1,4-cyclohexane diisocyanate, 1,3-cyclohexane diisocyanate, 3-isocyanatomethyl-3,5,5-trimethylhexyl isocyanate, 4,4'-methylenebis(cyclohexyl isocyanate), methyl-2,4-cyclohexane diisocyanate, methyl-2,6-cyclohexane diisocyanate, 1,2-bis(isocyanatomethyl)cyclohexane, 1,4-bis(isocyanatomethyl)cyclohexane, 1,3-bis(isocyanatomethyl)cyclohexane, and trans-cyclohexane-1,4-diisocyanate; aromatic diisocyanates such as m-xylene diisocyanate, m-phenylene diisocyanate, p-phenylene diisocyanate, 4,4'-diphenyl diisocyanate, 1,5-naphthalene diisocyanate, 4,4'-diphenylmethane diisocyanate, 2,4- or 2,6-tolylene diisocyanate, 4,4'-toluidine diisocyanate, dianisidine diisocyanate, and 4,4'-diphenyl ether diisocyanate; araliphatic diisocyanates such as ω,ω'-diisocyanate-1,3-dimethylbenzene, ω,ω'-diisocyanate-1,4-dimethylbenzene, ω,ω'-diisocyanate-1,4-diethylbenzene, and α,α,α',α'-tetramethylmetaxylylene diisocyanate; triisocyanates such as triphenylmethane-4,4',4"-triisocyanate, 1,3,5-triisocyanatebenzene, 2,4,6-triisocyanatetoluene, and ω-isocyanateethyl-2,6-diisocyanatocaproate; a blocked product of a tetraisocyanate such as 4,4'-diphenylmethylmethane-2,2',5,5'-tetraisocyanate; a blocked product of a derivative from an isocyanate compound such as a dimer, a trimer, a biuret, an allophanate, a carbodiimide, a polymethylene polyphenyl polyisocyanate (crude MDI, c-MDI, polymeric MDI), or crude TDI; or a blocked product of a prepolymer having an NCO group at the terminal obtained by a reaction of these compounds with an active hydrogen compound.

The conductive particles are particles having corrosion resistance that are alloys or compounds containing 50 mass% or more of Si, or composites thereof. The conductive particles are preferably ferrosilicon. In addition, an antirust pigment may be added to the chemical conversion coating film. Examples of the antirust pigment include known rust preventive pigments such as hexavalent chromates such as strontium chromate and calcium chromate. When it is desired to avoid use of a hexavalent chromium compound as a rust preventing agent, one that releases one or more of silicate ions, phosphate ions, and vanadate ions can be used.

Examples of the chemical conversion coating film of the present embodiment are not limited to the above.

A method of forming the chemical conversion coating film described above is not particularly limited, and a chemical treatment solution (film coating solution) corresponding to each composition described above may be applied to a Zn-based plated steel sheet by a known method, and baked and dried. An example of a preferable combination of the Zn-based plated steel sheet and the chemical conversion coating film is a combination of a Zn-Al-Mg plated steel sheet and an inorganic film containing a Si-based component as a main component.

### (1.7 Configuration of flow path)

Next, a configuration of the flow path 14 of the cooling structure 1 according to the present embodiment will be described.

In order to enhance the cooling efficiency of the cooling structure 1, it is preferable to increase the contact area between the cooling liquid and the flow path upper lid 12, that is, to increase the area of the region facing the flow path 14 in the flow path upper lid 12. Therefore, the flow path 14 has a parallel flow path portion 141 in which a plurality of partial flow paths 1411 extending along the first direction are arranged in the second direction orthogonal to the first direction. The first direction is, for example, a longitudinal direction or a lateral direction of the cooling structure 1. By providing parallel flow path portions 141 in which a plurality of partial flow paths 1411 are arranged in parallel, it is possible to increase a contact area between the cooling liquid and the flow path upper lid 12. However, in order to ensure more excellent cooling efficiency, the present inventors have made further investigations.

As means for further increasing the contact area between the cooling liquid and the flow path upper lid 12, it has been considered to increase the width W of the partial flow path 1411. However, the larger the width W of the partial flow path 1411, the larger the stress applied to the laser weld 13, and the life of the cooling structure 1 may be reduced. In addition, when the width W of the partial flow path 1411 is too wide, the cooling liquid does not stably flow in the extending direction of the partial flow path 1411, that is, along the first direction, and there is a possibility that cooling unevenness occurs.

Another means for further increasing the contact area between the cooling liquid and the flow path upper lid 12 is to narrow an interval D between the partial flow paths 1411. According to this means, it is possible to enhance cooling efficiency while preventing an increase in stress applied to the laser weld 13 and occurrence of cooling unevenness. For the above reason, in the cooling structure 1 according to the present embodiment, the interval D between the adjacent partial flow paths 1411 is set to 20 mm or less in a part or the whole of the parallel flow path portion 141. The interval D between the partial flow paths 1411 may be 18 mm or less, 16 mm or less, or 15 mm or less. The lower limit of the interval D between the partial flow paths 1411 is not particularly limited, but the interval D may be 0.8 mm or more, 1 mm or more, 3 mm or more, 5 mm or more, or 8 mm or more from the viewpoint of preventing joining failure.

The interval D between the partial flow paths 1411 is preferably within the above-described range in the entire parallel flow path portion 141. However, for example, by disposing another component such as a screw hole between the partial flow paths 1411, the interval D between the partial flow paths 1411 may be more than 20 mm in a part of the parallel flow path portion 141. In other words, the interval D between the partial flow paths 1411 may be within the above-described range in a part of the parallel flow path portion 141.

The width W of the partial flow path 1411 is not particularly limited as long as the interval D between the partial flow paths 1411 is within the above range. From the viewpoint of further increasing the contact area between the flow path forming portion and the flow path upper lid 12, the width W of the partial flow path 1411 may be 6 mm or more, 8 mm or more, of 10 mm or more. Meanwhile, the width W of the partial flow path 1411 may be set to 60 mm or less, 30 mm or less, 25 mm or less, or 20 mm or less from the viewpoint of further enhancing the joining strength between the press forming member 11 and the flow path upper lid 12 and further enhancing the uniformity of cooling. The height of the partial flow path 1411 is also not particularly limited, but may be, for example, 1 mm or more in order to further improve the cooling efficiency. On the other hand, in order to reduce the weight of the cooling structure 1, the height of the partial flow path 1411 may be 10 mm or less. The shape of the partial flow path 1411 described above may be applied to the partial flow path forming the flow path connecting portion 142.

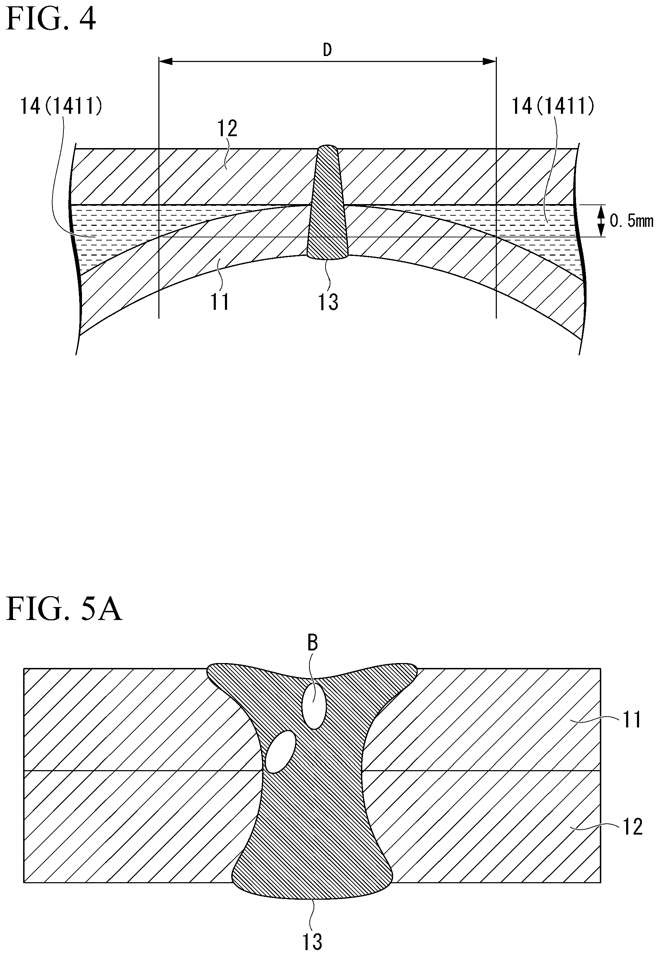

In the cooling structure 1 according to the present embodiment, the flow path 14 and the partial flow path 1411 included in the flow path mean a space through which a cooling liquid easily flows and which exhibits a substantial cooling effect. Therefore, as illustrated in FIG. 4, the flow path 14 and the partial flow path 1411 are defined as spaces between the flow path upper lid 12 and the press forming member 11, the spaces having a thickness of 0.5 mm or more along a direction perpendicular to the flow path upper lid 12. The interval D between the partial flow paths 1411 is an interval between spaces defined above. That is, the interval D between the partial flow paths 1411 is the total length of the laser weld 13, the width of the region where the flow path upper lid 12 and the press forming member 11 are in contact with each other, and the width of the region where the gap between the flow path upper lid 12 and the press forming member 11 is less than 0.5 mm. Although not illustrated in FIG. 4, the width W of the partial flow path 1411 is the width of the space defined as described above. That is, the width W of the partial flow path 1411 is a width of a space having a thickness of 0.5 mm or more along a direction perpendicular to the flow path upper lid 12. In addition, the interval D between the partial flow paths 1411 and the width W of the partial flow path are values measured along a second direction perpendicular to the first direction which is the extending direction of the partial flow path 1141.

### (1.8 Configuration of laser weld)

In order to set the interval D between the partial flow paths 1411 within the above-described range, in the cooling structure 1 according to the present embodiment, a joint portion for forming the flow path 14 is the laser weld 13. In the laser welding, the bead width can be reduced. Therefore, it is effective joining means for narrowing the interval D between the partial flow paths 1411. In addition, since the laser welding forms a linear bead, it is possible to enhance the liquid tightness of the flow path 14 as compared with a point joining means such as spot welding.

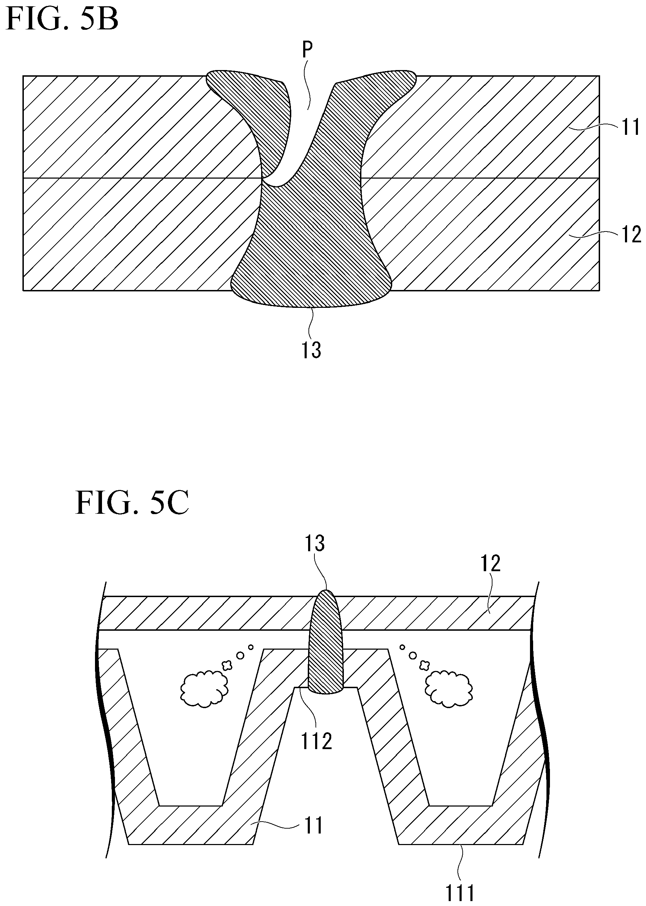

In the laser weld 13, a blow hole B schematically illustrated in FIG. 5A and a pit P schematically illustrated in FIG. 5B may be formed. The blow hole B is a spherical cavity generated in the weld metal. The pit P is a pore that reaches the surface of the weld and is opened. The blow holes B and the pits P are generated by Zn based plating vaporized during laser welding. Since the boiling point of the Zn-based plating is lower than the melting point of the base steel sheet, the Zn-based plating is gasified by laser welding. The blow holes and pits lead to a decrease in corrosion resistance and a decrease in liquid tightness of the cooling structure 1.

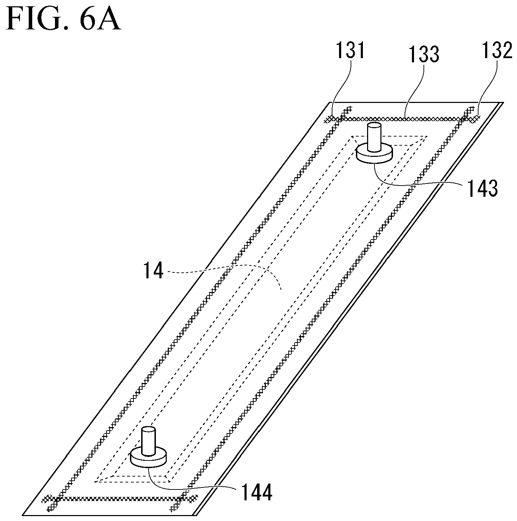

For the above reason, in the cooling structure 1 according to the present embodiment, the ratio of the length of the region where the blow hole B and the pit P are formed to the total length of the laser weld 13 facing the flow path 14 is 0.2 or less. Here, the laser weld 13 facing the flow path 14 refers to a part that is not separated from the flow path 14 by another laser weld among all the laser welds 13. For example, in FIG. 6A, four laser welds 13 surrounding the flow path 14 are formed. Among these, a region forming a rectangle surrounding the flow path 14 is "laser weld 13 facing the flow path 14". The laser weld 13 facing the flow path 14 is exposed to a cooling liquid flowing inside the flow path 14. On the other hand, since the laser weld 13 protruding to the outside of the rectangle is separated from the flow path 14 by the other laser weld 13, it does not correspond to the "laser weld 13 facing the flow path 14". A region of the laser weld 13 that does not correspond to the "laser weld 13 facing the flow path 14" is not exposed to the cooling liquid.

The laser weld 13 facing the flow path 14 strongly affects liquid tightness of the flow path 14 and inner surface corrosion resistance of the cooling structure 1. Therefore, it is preferable to reduce the amounts of the blow holes B and the pits P in the laser weld 13 facing the flow path 14 as much as possible. In order to ensure the liquid tightness and the cooling liquid corrosion resistance required for the cooling structure 1, the ratio of the length of the region where the blow holes B and the pits P are formed to the total length of the laser weld 13 facing the flow path 14 needs to be 0.2 or less. The ratio of the length of the region where the blow holes B and the pits P are formed to the total length of the laser weld 13 facing the flow path 14 is preferably 0.18 or less, 0.15 or less, 0.10 or less, or 0.05 or less. On the other hand, a region of the laser weld 13 that does not face the flow path 14 is not exposed to the cooling liquid. Therefore, it is not necessary to limit the amount of the blow holes B and the pits P in the laser weld 13 not facing the flow path 14.

The ratio of the length of the region where the blow hole B and the pit P are formed to the total length of the laser weld 13 facing the flow path 14 is measured by the following procedure. The existence of the blow hole B and the length of the blow hole B in the welding line direction can be confirmed by transmitting the laser weld 13 with X-rays and observing the laser weld. Further, since the pit P is exposed on the surface of the laser weld 13, the length of the pit P in the welding line direction can be visually measured. The ratio of the length of the region where the blow hole B and the pit P are formed to the total length of the laser weld 13 facing the flow path 14 can be obtained by dividing the sum of the lengths of the blow hole B and the pit P in the welding line direction measured in this manner by the total length of the laser weld 13 facing the flow path 14.

Means for reducing the blow holes B and the pits P is not particularly limited. A preferred example will be described below.

In order to reduce the number of the blow holes B and the number of the pits P, a gap between the press forming member 11 and the flow path upper lid 12 in the periphery of the weld metal of the laser weld 13 may be 0.03 mm or more, 0.05 mm or more, 0.1 mm or more, or 0.2 mm or more. As a result, as schematically illustrated in FIG. 5C, the Zn-based plating vaporized during laser welding does not enter the weld metal and is discharged to the outside of the weld. Therefore, the gaps provided in the mating surfaces of the plated steel sheets can reduce the blow holes B and the pits P. The upper limit of the gap between the press forming member 11 and the flow path upper lid 12 around the weld metal of the laser weld 13 is not particularly limited, but this gap is preferably 0.5 mm or less in order to reliably perform laser welding. Further, a gap provided at a position away from the weld metal of the laser weld 13, for example, at a position away from the weld metal by 5 mm or more does not affect an occurrence rate of the blow hole B and the pit P. Therefore, the size of the gap at a position 5 mm or more away from the weld metal is not particularly limited.

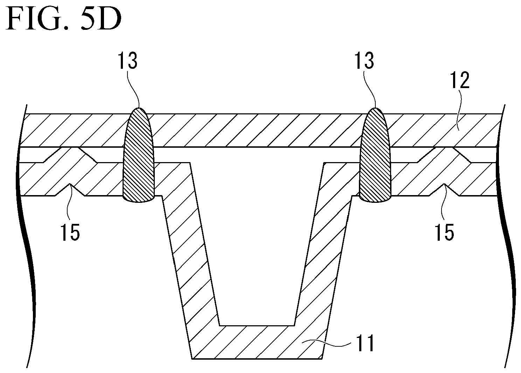

In order to provide the above-described gap, for example, a spacer having a thickness of 0.03 mm or more may be disposed between the press forming member 11 and the flow path upper lid 12 around the weld metal of the laser weld 13. The thickness of the spacer can be appropriately selected according to the size of the gap to be provided. The thickness of the spacer may be 0.05 mm or more, 0.1 mm or more, or 0.2 mm or more. The thickness of the spacer may be 0.5 mm or less or 0.3 mm or less. When the gap is too wide, burning-through may occur to cause water leakage, and thus the size of the gap is preferably equal to or less than the sheet thickness t of the thinner one of the press forming member 11 and the flow path upper lid 12, and more preferably equal to or less than 0.8 t. The spacer may be, for example, a metal foil sandwiched between the press forming member 11 and the flow path upper lid 12. On the other hand, as shown in FIG. 5D, the flow path upper lid 12 or the press forming member 11 may be deformed to form the projection 15, and this may be used as a spacer. In a case where the projection 15 is used as a spacer, the height of the projection 15 is regarded as the thickness of the spacer.

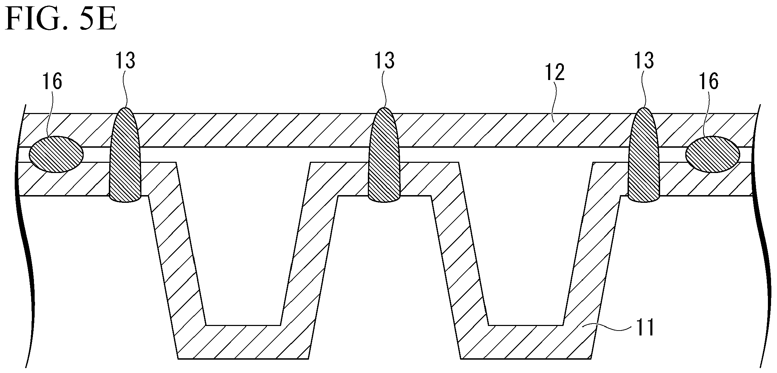

Instead of using the spacer or in addition to using the spacer, a gap may be formed by spot welding as illustrated in FIG. 5E. When the plated steel sheet is spot-welded, a gap may be formed on a mating surface of the plated steel sheet. Therefore, by spot-welding the press forming member 11 and the flow path upper lid 12 before laser welding, a gap is provided between the press forming member 11 and the flow path upper lid 12, and generation of the blow hole B and the pit P can be suppressed during laser welding. From the viewpoint of workability, it is more preferable to form the gap by spot welding than the spacer.

The spot weld 16 for joining the press forming member 11 and the flow path upper lid 12 may be formed at a position overlapping the laser weld 13 or in the vicinity of the laser weld 13. More preferably, the spot weld 16 is formed in the vicinity of the laser weld 13 and at a position not facing the flow path 14. In other words, it is preferable to provide the spot weld 16 such that the laser weld 13 is disposed between the spot weld 16 and the flow path 14. The size of the gap formed by the spot weld 16 varies depending on the spot-welding condition. The distance between the spot weld 16 and the laser weld 13 is not particularly limited, but for example, if the shortest distance from the spot weld 16 to the laser weld 13 is set to 1 mm and an appropriate gap is formed, the blow hole B and the pit P can be prevented. The distance between the spot weld 16 and the laser weld 13 is desirably comprehensively determined in consideration of spot-welding conditions, the thickness of the plated steel sheet, and the strength of the plated steel sheet.

A method for measuring the gap between press forming member 11 and flow path upper lid 12 around the weld metal of laser weld 13 is as follows. The laser weld 13 is cut in a direction orthogonal to the welding line direction to observe the cross section, and the distance between the press forming member 11 and the flow path upper lid 12 at a position 0.1 mm away from the weld metal end portion in the width direction of weld between the press forming member 11 and the flow path upper lid 12 is the amount of the gap between the press forming member 11 and the flow path upper lid 12 around the weld metal of the laser weld 13.

Examples of suitable means for suppressing the occurrence of the blow hole B and the pit P are as described above. However, in the cooling structure 1 according to the present embodiment, various other means can be adopted. For example, the Zn-based plating at the portion to be laser-welded may be removed in advance before the base steel sheet of the plated steel sheet is melt-solidified by laser welding. In this case, generation of the blow holes B and the pits P can be suppressed without providing a gap between the press forming member 11 and the flow path upper lid 12. For example, before laser welding, the part to be welded may be heated using a laser up to a temperature range from the melting point of the Zn-based plating to the melting point of the base steel sheet. Thus, the Zn-based plating can be removed from the part to be welded. In addition, before laser welding, the Zn-based plating may be mechanically removed from the part to be welded of the plated steel sheet using means such as grinding.

As long as the amount of the blow holes B and the pits P generated is within the above range, the configuration of the laser weld 13 is not particularly limited, and various configurations corresponding to the shape of the flow path 14 can be adopted. Hereinafter, a preferred aspect of the laser weld 13 will be described.

For example, the bead width on the laser radiation side, that is, the larger one of the bead width of the surface of the laser weld 13 in the flow path upper lid 12 and the bead width of the surface of the laser weld 13 in the press forming member 11, may be set to 0.8 to 1.5 mm. By setting the bead width to 0.8 mm or more, the liquid tightness of the flow path 14 can be further enhanced. On the other hand, by setting the bead width to 1.5 mm or less, evaporation of plating in the vicinity of the bead can be prevented, and corrosion resistance of the cooling structure 1 can be further enhanced.

For example, as illustrated in FIG. 6A, the laser weld 13 includes a start position 131, an end position 132, and a middle portion 133 therebetween. The start position 131 of the laser weld 13 is a portion corresponding to a portion where the laser welding is started, and the end position 132 of the laser weld 13 is a portion corresponding to a portion where the laser welding is finished. In the present embodiment, it is not necessary to distinguish the start position 131 and the end position 132. Since the start position 131 and the end position 132 are clearly different in width and the like from the middle portion 133, the start position 131 and the end position 132 can be clearly distinguished from the middle portion 133.

The middle portion 133 tends to have less welding defects than the start position 131 and the end position 132, and thus have more excellent corrosion resistance and liquid tightness. Therefore, it is preferable that the flow path 14 is formed using the middle portion 133 of the laser weld 13 and is separated from the start position 131 and the end position 132. In other words, as illustrated in FIG. 6A, it is preferable that laser welding is performed such that the middle portion 133 of the laser weld 13 is disposed between the start position 131 and the end position 132 of the laser weld 13 and the flow path 14. This makes it possible to prevent the start position 131 and the end position 132 from being exposed to the cooling liquid.

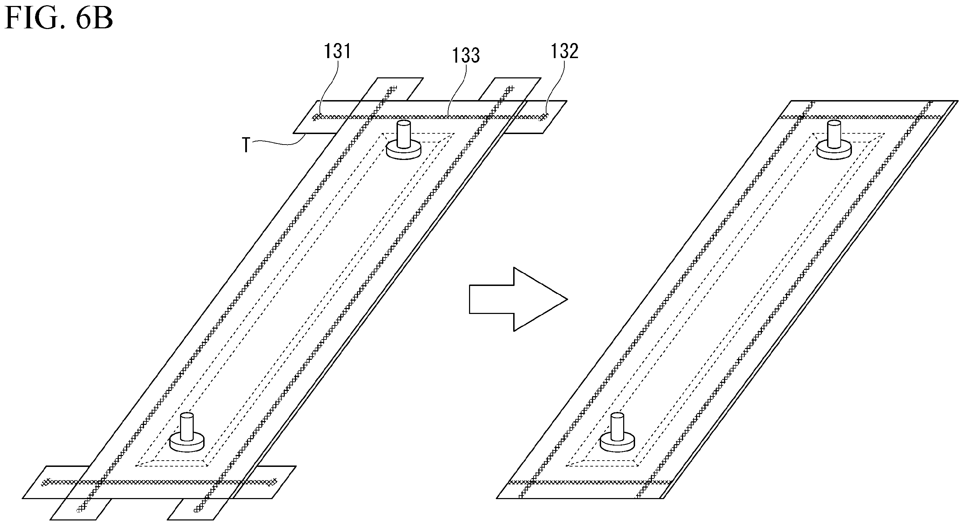

As illustrated in FIG. 6B, it is more preferable that start position 131 and end position 132 of the laser weld 13 are omitted from the cooling structure 1. For example, a tab plate T is provided on the flow path upper lid 12 or the press forming member 11 before being laser welded, laser welding is performed so that the start position 131 and the end position 132 are formed on the tab plate T, and then the tab plate T is cut and removed, whereby the cooling structure 1 not including the start position 131 and the end position 132 of the laser weld 13 can be obtained.

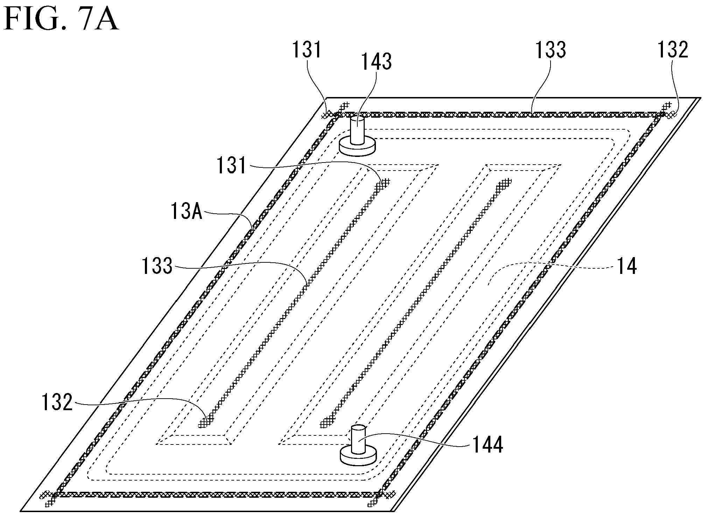

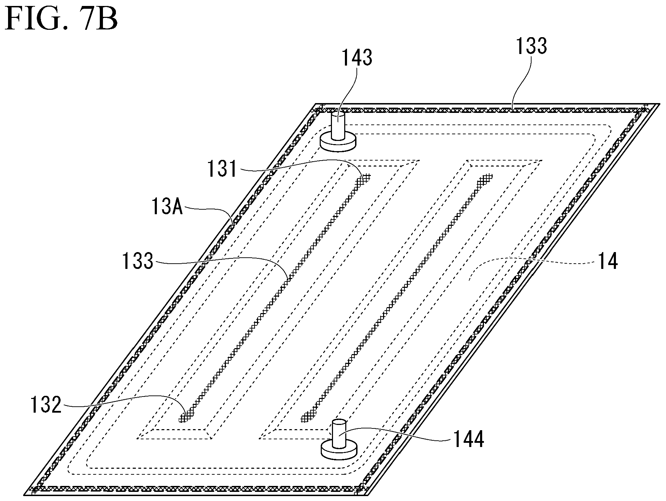

In the cooling structure 1, a configuration in which the start position 131 and the end position 132 are omitted only at a portion where liquid leakage is concerned may be applied. For example, in the cooling structure 1 illustrated in FIGS. 7A and 7B, when flow path upper lid 12 is peeled off from press forming member 11 at a portion (dark color portion denoted by reference numeral 13A) provided along the outer edge of press forming member 11 and flow path upper lid 12 in laser weld 13, the cooling liquid leaks to the outside of the cooling structure 1. On the other hand, in the cooling structure 1 illustrated in FIGS. 7A and 7B, even if the flow path upper lid 12 is peeled off from the press forming member 11 at the laser weld 13 provided in a region surrounded by the flow path 14, cooling water does not leak out of the cooling structure 1. Therefore, when a portion of the laser weld 13 surrounding all of the flow paths 14 (dark color portion denoted by reference numeral 13A) is defined as a flow path outer edge weld 13A, it is preferable that the start position 131 and the end position 132 are omitted from the flow path outer edge weld 13A. In this case, even if the laser weld 13 excluding the flow path outer edge weld 13A includes the start position 131 and the end position 132, it is possible to sufficiently suppress a situation in which the cooling water leaks to the outside of the cooling structure 1.

Similarly to FIG. 5A, the cooling structure 1 illustrated in FIG. 7A is obtained by manufacturing the flow path outer edge weld 13A using only the middle portion 133 of the laser weld 13. In this case, the start position and the end position are omitted from the flow path outer edge weld 13A, but are left in the cooling structure 1. On the other hand, as in FIG. 5B, the cooling structure 1 illustrated in FIG. 7B is obtained by providing the tab plate T on the flow path upper lid 12 or the press forming member 11 before being laser welded, performing laser welding so that the start position 131 and the end position 132 are formed on the tab plate T, and then cutting and removing the tab plate T. In this case, the start position and the end position generated at the time of forming the flow path outer edge weld 13A do not remain in the cooling structure 1. In addition, when laser radiation is started from a position in which the flow path upper lid 12 and the press forming member 11 are not exposed to the laser, laser welding is performed, laser radiation is performed to a position in which the flow path upper lid 12 and the press forming member 11 are not exposed to the laser to run through, and laser radiation is then stopped, the start position and the end position in the formation of the flow path outer edge weld 13A do not remain in the cooling structure 1.

In the flow path upper lid 12, a bead height of the laser weld 13 may be 0.3 mm or less. By setting the bead height of the laser weld 13 to 0.3 mm or less, a gap between the flow path upper lid 12 and a cooling target (for example, a battery pack or a battery cell) can be reduced, and cooling efficiency can be further enhanced. The bead height of the laser weld 13 may be reduced, for example, through control of laser welding conditions. In addition, the bead height may be reduced by grinding the bead after the end of the laser welding.

### (1.9 Other configurations)

As illustrated in FIG. 2A, the flow path connecting portion 142 that communicates the plurality of partial flow paths 1411 may be further provided in the flow path 14. In addition, the cooling liquid inlet 143 and the cooling liquid outlet 144 for introducing a cooling liquid into the flow path may be further provided in the flow path 14. In a case where the flow path 14 has the flow path connecting portion 142, the flow path 14 forms one space. In this case, one cooling liquid inlet 143 and one cooling liquid outlet 144 may be provided in the cooling structure 1. On the other hand, the flow path connecting portion 142 may not be provided in the cooling structure 1. In this case, the cooling liquid inlet 143 and the cooling liquid outlet 144 may be provided in each of the plurality of partial flow paths 1411. Only a part of the plurality of partial flow paths 1411 may be communicated by the flow path connecting portion 142, and the flow path 14 may form two or more spaces.

In FIG. 2A and the like, each of the two flow path connecting portions 142 is one straight flow path, and the flow path connecting portion 142 communicates with all the partial flow paths 1411 to be orthogonal thereto. However, the shape of the flow path connecting portion 142 and the arrangement of the flow path connecting portion 142 and the partial flow path 1411 are not limited thereto. For example, the angle formed by the flow path connecting portion 142 and the partial flow path 1141 is not limited to 90°, and can be appropriately selected according to the use of the cooling structure 1. The flow path connecting portion 142 may have a branch structure. As shown in FIG. 2B, each of the two flow path connecting portions 142 may be branched in a fan shape starting from the cooling liquid inlet 143 or the cooling liquid outlet 144, and communicate with each of the partial flow paths 1411 at various angles at the branch destination. In FIG. 2B, the laser weld 13 is omitted.

The shape in a plane view of the press forming member 11 and the flow path upper lid 12 forming the cooling surface of the cooling structure 1 is not particularly limited. For example, in a case where the use of the cooling structure 1 is cooling of a battery of an EV, the plane view shape of the flow path upper lid 12 is desirably rectangular. In this case, the size of the flow path upper lid 12 in a plane view is preferably 1000 to 2300 mm in the longitudinal direction and 200 mm to 1500 mm in the lateral direction. Similarly, the size of the press forming member 11 in a plane view is preferably 1000 to 2300 mm in the longitudinal direction and 200 mm to 1500 mm in the lateral direction. When the cooling structure 1 in which the press forming member 11 and/or the flow path upper lid 12 has a large area and the interval D between the flow paths is narrow is manufactured, a bonding failure between the bank part 112 and the flow path upper lid 12 tends to be a problem. However, for example, according to a manufacturing method described later, a bonding failure can be easily avoided.

The size of the flow path upper lid 12 in the longitudinal direction in a plane view may be 1200 mm or more, 1400 mm or more, or 1600 mm or more. The size of the flow path upper lid 12 in the longitudinal direction in a plane view may be 2200 mm or less, 2000 mm or less, or 1800 mm or less. The size of the flow path upper lid 12 in the lateral direction in a plane view may be 250 mm or more, 500 mm or more, or 700 mm or more. The size of the flow path upper lid 12 in the lateral direction in a plane view may be 1400 mm or less, 1300 mm or less, or 1200 mm or less.

The size of the press forming member 11 in the longitudinal direction in a plane view may be 1200 mm or more, 1400 mm or more, or 1600 mm or more. The size of the press forming member 11 in the longitudinal direction in a plane view may be 2200 mm or less, 2000 mm or less, or 1800 mm or less. The size of the press forming member 11 in the lateral direction in a plane view may be 250 mm or more, 500 mm or more, or 700 mm or more. The size of the press forming member 11 in the lateral direction in a plane view may be 1400 mm or less, 1300 mm or less, or 1200 mm or less.

As described above, in the cooling structure according to the first embodiment, the outer surface corrosion resistance and the cooling liquid corrosion resistance can be secured by using the Zn-based plated steel sheets as the press forming member 11 and the flow path upper lid 12. As a result, it is possible to suppress flow path corrosion and to suppress occurrence of contamination that causes a decrease in thermal conductivity and clogging.

In the cooling structure according to the first embodiment, by laser welding the press forming member 11 and the flow path upper lid 12, the interval D between the partial flow paths 1411 in the parallel flow path portion 141 is set to 20 mm or less, and the area where the cooling liquid and the flow path upper lid 12 are in contact with each other is increased, so that the cooling efficiency can be improved.

In addition, in the cooling structure according to the first embodiment, the press forming member 11 and the flow path upper lid 12 are laser welded, and furthermore, the generation of blow holes and pits is suppressed, whereby the liquid tightness of the flow path 14 can be enhanced.

### (2. Battery unit)

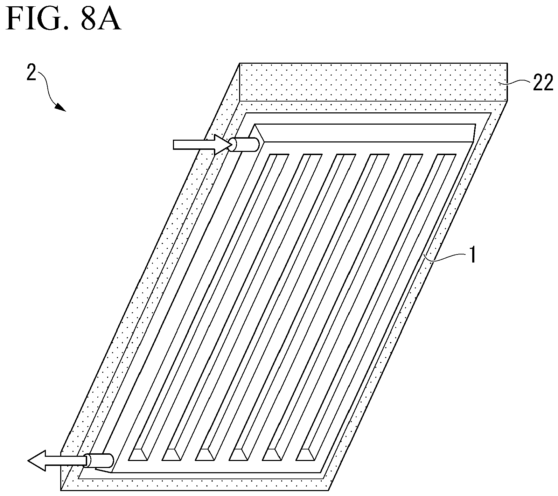

Next, a battery unit according to a second embodiment of the present invention will be described. As illustrated in FIGS. 8A to 8C, the battery unit 2 according to the present embodiment includes a battery cell 21, a battery pack 22 in which the battery cell 21 is housed, and the cooling structure 1 according to the first embodiment.

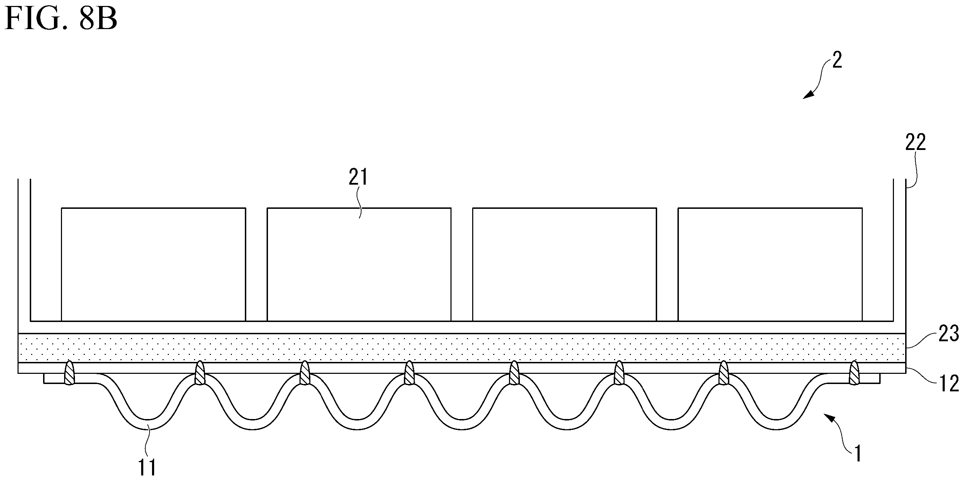

When the cooling structure 1 is incorporated into the battery unit 2, as shown in FIG. 8B, the battery pack 22 can be used as the flow path upper lid 12 of the cooling structure 1. In other words, the bank part 112 of the press forming member 11 and the battery pack 22 can be laser welded. By integrating the battery pack 22 and the cooling structure 1, the battery unit 2 can extremely efficiently cool the battery cell 21.

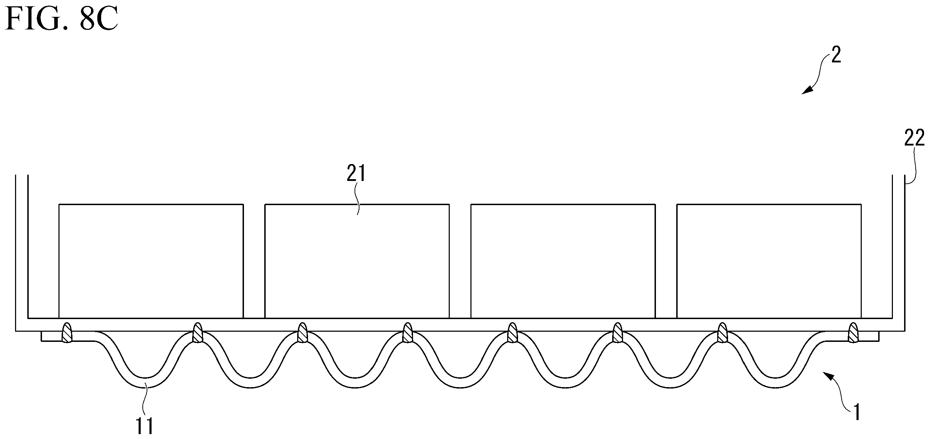

On the other hand, a structure in which the battery pack 22 and the cooling structure 1 are separated may be adopted. For example, the battery unit 2 may be manufactured by joining the flow path upper lid 12 and the battery pack 22. In this case, as illustrated in FIG. 8C, a gap filler 23 may be disposed between the flow path upper lid 12 and the battery pack 22. For some reason (dimensional accuracy error, complicated irregularity shape formed in the battery pack 22, and the like), it may be difficult to join the battery pack 22 and the flow path upper lid 12 of the cooling structure 1 without a gap. In such a case, the gap filler 23 can be used. The gap filler 23 is generally a resin containing a pigment having high thermal conductivity. By inserting the gap filler 23 between different substances, heat exchange efficiency can be improved. In the present embodiment, the thermal conductivity of the gap filler 23 is preferably 3.5 W/m or more. An example of the gap filler 23 is "SDP-3540-A" manufactured by Shin-Etsu Chemical Co., Ltd. The thickness of the gap filler is preferably 0.1 mm to 8.0 mm, and more preferably 0.5 mm to 3.0 mm.

The configuration of the battery pack 22 is not particularly limited. For example, the battery pack 22 may have a substantially rectangular shape, and the cooling structure 1 may be disposed on the bottom surface portion thereof, or the bottom surface portion thereof may be used as the flow path upper lid 12 of the cooling structure 1. In addition, form the viewpoint of improving corrosion resistance, the steel sheet forming the battery pack 22 is preferably a Zn-based plated steel sheet or an Al-based plated steel sheet. However, in a case where a structure in which the battery pack 22 and the cooling structure 1 are separated as illustrated in FIG. 8C is adopted, it is not essential to impart cooling liquid corrosion resistance to a portion of the battery pack 22 to which the cooling structure 1 is attached, for example, a bottom surface portion.

The thickness of the Zn-based plated steel sheet forming the bottom surface portion of the battery pack 22 is not particularly limited, but is, for example, preferably 0.2 to 1.2 mm or 0.3 to 1.2 mm, and more preferably 0.4 to 0.6 mm. In this case, the bottom surface portion can be formed thin while maintaining a strength of the bottom surface portion of the battery pack 22. Therefore, since a distance between a cooling liquid and an internal structure of the battery pack 22 can be narrowed, cooling efficiency of the battery pack 22 can be enhanced, and cooling responsiveness of the battery pack 22 can be enhanced.

### (3. Manufacturing method of cooling structure)

Next, a manufacturing method of a cooling structure according to a third embodiment of the present invention will be described. The manufacturing method of the cooling structure according to the third embodiment includes press-forming (S1) a plated steel sheet to obtain a press forming member 11, and laser welding (S2) the press forming member and the flow path upper lid. Details of these steps will be described below. According to this manufacturing method, the cooling structure according to the first embodiment can be suitably manufactured. However, the following description does not limit the manufacturing method of the cooling structure according to the first embodiment.

### (S1 Press forming)

In the manufacturing method of the cooling structure according to the present embodiment, first, a plated steel sheet is press-formed. As a result, the press forming member 11 having the groove part 111 and the bank part 112 provided around the groove part 111 is obtained. A plated steel sheet subjected to press forming includes a Zn-based plating and an inorganic film or a resin film provided as a chemical conversion coating film on a surface of the Zn-based plating. The inorganic film contains a Si-based component or a Zr-based component as a main component. A preferred aspect of the plated steel sheet is as described above. In the cooling structure 1 finally obtained, the flow path 14 includes the parallel flow path portion 141 in which the plurality of partial flow paths 1411 extending along the first direction are arranged in the second direction orthogonal to the first direction, and in the parallel flow path portion 141, the interval D between the adjacent partial flow paths 1411 is 20 mm or less. In order to achieve such a shape of the flow path 14, it is necessary to form the groove part 111 in press forming.

### (S2 Laser welding)

Next, the flow path upper lid 12, which is a flat sheet, is placed on a position covering the groove part 111 of the press forming member 11, and the flow path upper lid 12 and the bank part 112 of the press forming member 11 are laser welded. As a result, the laser weld 13 forming the flow path 14 through which the cooling liquid is capable of flowing is obtained.

The laser welding conditions are not particularly limited, and suitable conditions according to the sheet thickness of the plated steel sheet and the like can be appropriately adopted. However, in the laser weld 13 obtained by the laser welding, it is necessary to set the ratio of the length of the region where the blow hole and the pit are formed to the total length of the laser weld 13 facing the flow path 14 to 0.2 or less. Generation of blow holes and pits may be suppressed by optimization of laser welding conditions, or may be suppressed by providing an additional step before laser welding. Hereinafter, an example of means for suppressing the occurrence of blow holes and pits will be described.

During laser welding of the Zn-based plated steel sheet, vaporized Zn-based plating forms blow holes and pits. One of means for generating blow holes and pits is to provide a gap between plated steel sheets and release vaporized Zn from the gap to the outside of the weld.

An example of the means for forming the gap is a spacer. For example, before laser welding, a spacer having a thickness of 0.03 mm or more may be disposed between the press forming member 11 and the flow path upper lid 12 at a portion to be laser-welded or in the vicinity of a portion to be laser-welded. As a result, the gap between the press forming member 11 and the flow path upper lid 12 at the portion to be laser-welded or in the vicinity of the portion to be laser-welded can be made 0.03 mm or more. The spacer is, for example, a metal foil.

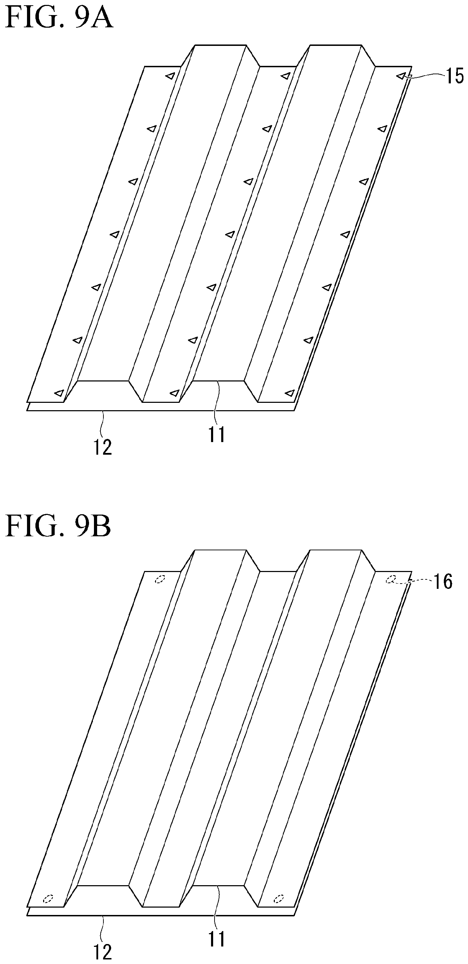

As illustrated in FIG. 9A, a projection 15 formed by deforming the flow path upper lid 12 or the press forming member 11 may be used as a spacer. In other words, the manufacturing method of the cooling structure 1 may further include deforming the flow path upper lid 12 or the press forming member 11 to form the projection 15. When the projection 15 is formed on the press forming member, the projection 15 can be provided during press-forming the plated steel sheet. As illustrated in FIG. 9A, when the flow path upper lid 12 and the press forming member 11 provided with the projections 15 are overlapped, a gap is formed between the flow path upper lid 12 and the press forming member 11. By laser welding the flow path upper lid 12 and the press forming member 11 in this state, it is possible to suppress the occurrence of blow holes and pits.

Another example of means for forming the gap is the spot welding illustrated in FIG. 9B. When the plated steel sheet is spot-welded, a gap may be generated in the weld. This gap can be used as means for releasing the Zn-based plating vaporized during laser welding. Therefore, for example, before laser welding, the press forming member 11 and the flow path upper lid 12 may be spot-welded at a portion to be laser-welded or in the vicinity of a portion to be laser welded. Using the spot weld 16, the gap between the press forming member 11 and the flow path upper lid 12 at the portion to be laser welded or in the vicinity of the portion to be laser welded can be made 0.03 mm or more. The size of the gap can be more easily adjusted by inserting a metal foil into a spot-welding target before spot welding.

In addition, by removing the Zn-based plating from the part to be welded before laser welding, the occurrence of blow hole and pits can also be suppressed. For example, the Zn-based plating at the portion to be laser welded may be removed in advance before the base steel sheet of the plated steel sheet is melt-solidified by laser welding. For example, the part to be welded may be heated using a laser up to a temperature range from the melting point of the Zn-based plating to the melting point of the base steel sheet. In addition, before laser welding, the Zn-based plating may be mechanically removed from the part to be welded of the plated steel sheet using means such as grinding.

### [Examples]

The effect of one aspect of the present invention will be described more specifically with reference to examples. However, the conditions in the examples are merely one condition example adopted to confirm the operability and effects of the present invention. The present invention is not limited to this one condition example. The present invention can adopt various conditions as long as the object of the present invention is achieved without departing from the gist of the present invention.

### (Example 1 Relationship between flow path interval, availability of assembly, and performance of cooling structure)

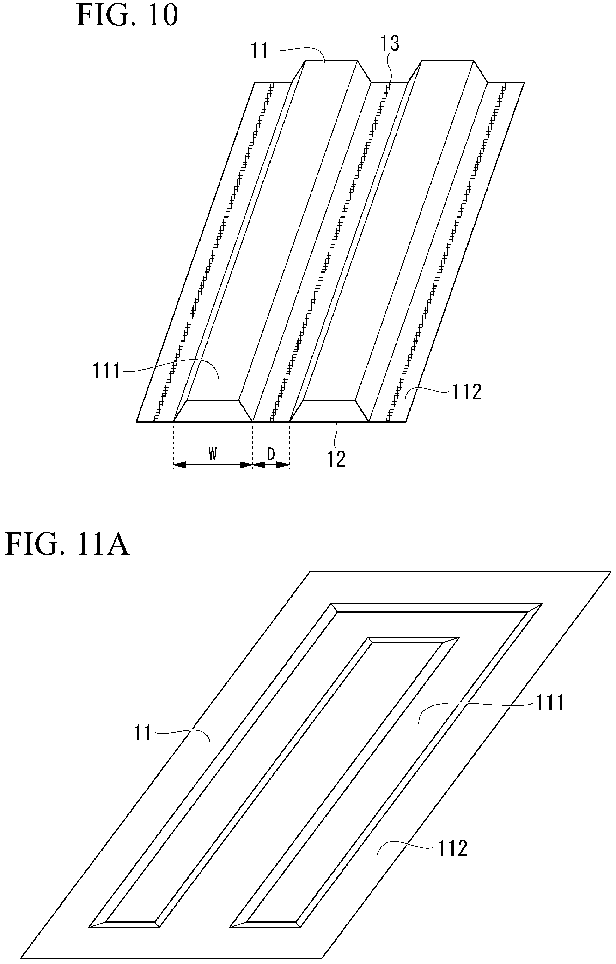

The Zn-based plated steel sheet was press-formed to prepare a press forming member. The press forming member and a flow path upper lid formed of the flat sheet of the Zn-based plated steel sheet were laser welded to produce a cooling structure. The flow path width and the flow path interval of the plurality of partial flow paths extending in parallel are shown in Table 1. The manufacture conditions not included in Table 1 were as follows. The flow path connecting portion communicating the partial flow paths was not created. The gap between the plated steel sheets was formed by sandwiching the jig between the plated steel sheets. · Type of plated steel sheet: Zn-based plated mild steel sheet having a sheet thickness of 0.5 mm
- Laser welding machine: Fiber laser welding machine
- Heat input condition during laser welding: 45000 J/m
- Shape of cooling structure of examples: described in FIG. 10
- Partial flow path length: 200 mm
- Partial flow path height: 10 mm
- Gap between plated steel sheets: 0.1 mm

FIG. 10 is a schematic diagram of a part of the manufactured cooling structure. For convenience, only two partial flow paths are illustrated in FIG. 10, but actually, the number of partial flow paths capable of covering a battery having a width of 120 mm is provided in the cooling structure. In any of the examples shown in Table 1, the cooling structure could be assembled by laser welding.

The evaluation results of the cooling structure created as described above are also shown in Table 1. The evaluation criteria were as described below.

With respect to the flow path width W of the partial flow path, those having a width of 20 mm or less were rated as "S", those having a width of more than 20 mm and 30 mm or less were rated as "A", and those having a width of more than 30 mm were rated as "B". This is because the flow of the cooling liquid can be stabilized and the cooling efficiency can be further improved as the flow path width W is smaller.

"D/2" is a value obtained by dividing the interval D between the plurality of partial flow paths by 2. This value is the maximum distance along the flow path width direction at a location where the partial flow path and the partial flow path are not in direct contact with each other, and is preferably as small as possible. If the D/2 is too large, cooling of a portion not in contact with the flow path becomes insufficient, and there is a possibility that a sufficient function as a cooling structure cannot be exhibited. A sample having a D/2 of 7.5 mm or less was rated as "A", a sample having a D/2 of more than 7.5 mm and 10 mm or less was rated as "B", and a sample having a D/2 of more than 10 mm was rated as "C". A sample evaluated as Rank A or Rank B was determined to have a sufficiently narrow flow path interval.

**[Table 1]**

| Flow path width W (mm) | Flow path interval D (mm) | D/2 (mm) | Flow path width determination | D/2 determination |
|---|---|---|---|---|
| 60 | 25 | 12.5 | B | c |
| 60 | 20 | 10.0 | B | B |
| 60 | 15 | 7.5 | B | A |
| 60 | 10 | 5.0 | B | A |
| 60 | 5 | 2.5 | B | A |
| 30 | 25 | 12.5 | A | c |
| 30 | 20 | 10.0 | A | B |
| 30 | 15 | 7.5 | A | A |
| 30 | 10 | 5.0 | A | A |
| 30 | 5 | 2.5 | A | A |
| 20 | 25 | 12.5 | S | c |
| 20 | 20 | 10.0 | S | B |
| 20 | 15 | 7.5 | S | A |
| 20 | 10 | 5.0 | S | A |
| 20 | 5 | 2.5 | S | A |
| 10 | 25 | 12.5 | S | c |
| 10 | 20 | 10.0 | S | B |
| 10 | 15 | 7.5 | S | A |
| 10 | 10 | 5.0 | S | A |
| 10 | 5 | 2.5 | S | A |

All examples shown in Table 1 were manufacturable by laser welding. Therefore, it can be seen that, in the case of laser welding, it is possible to manufacture a partial flow path that can exhibit high cooling performance even when the partial flow path width is 10 mm, which is the narrowest among the prepared partial flow paths.

### (Example 2 Liquid tightness evaluation)

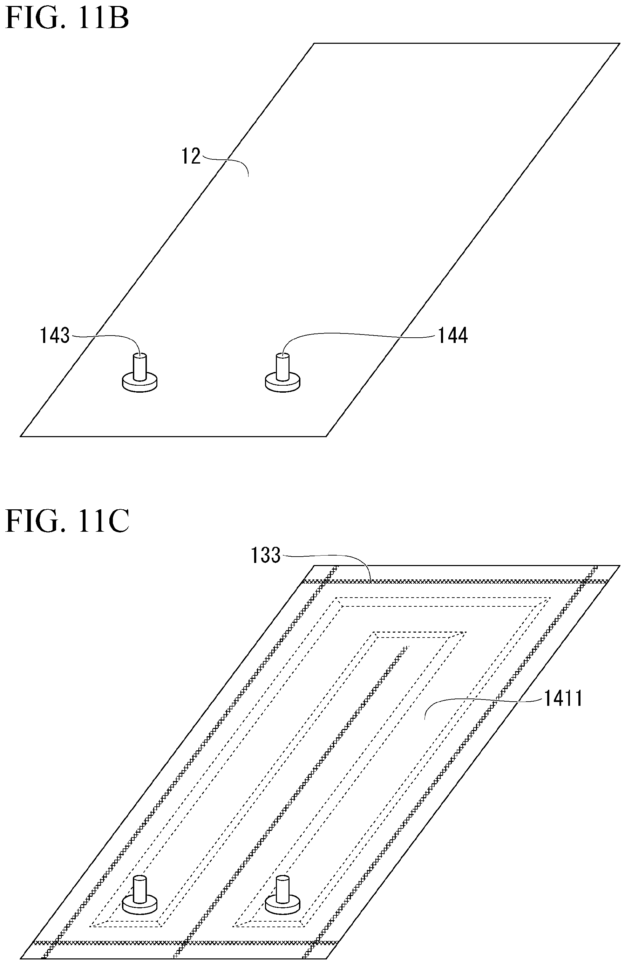

A flow path was prepared using a Zn-based plated mild steel sheet having a sheet thickness of 0.5 mm. The shapes of the press forming member and the flow path upper lid before welding were basically as shown in FIGS. 11A and 11B, and the shape of the flow path was as illustrated in FIG. 11C. Regarding the example in which "corrugated sheet shape" is described in the Remarks section, the cross-sectional shape of the partial flow path is the waveform shown in FIG. 3, but the same shape as other examples was adopted except for this. In any example, the flow path shape in a plane view is a U shape, and two flow paths extending in the longitudinal direction correspond to the partial flow path. The flow path interval and the size of the gap between the plated steel sheets were as described in Table 2. Means for providing the gap are described in the "Remarks" section of Table 2. The flow path width was 20 mm in all examples.

Then, the blow hole and pit rate in the cooling structure manufactured by the above-described manufacture was measured. The length of each blow hole in the welding line direction was measured by observing the laser weld through the X-ray. In addition, the length of the pit in the welding line direction was visually measured. By dividing the sum of the measured lengths of the blow hole and the pit in the welding line direction by the total length of the laser weld facing the flow path, the ratio of the length of the region where the blow hole and the pit were formed to the total length of the laser weld facing the flow path (blow hole and pit rate) was obtained.

Further, the liquid tightness of the cooling structure manufactured by the above-described procedure was evaluated. The long-life coolant liquid (LLC) as a cooling liquid was circulated inside the flow path of the cooling structure. The output during the LLC circulation was adjusted so that the pressure inside the flow path was 1.5 atm. By this circulation test, the presence or absence of water leakage from the weld was confirmed. The results are shown in Table 2.

**[Table 2]**

| Flow path Interval | Gap between steel sheets | Blow hole and pit rate | Water leakage | Remarks |
|---|---|---|---|---|
| 10 mm | 0.0 mm | 100% | Present | - |
| 10 mm | 0.05 mm | 6% | None | Gap provision by jig |
| 10 mm | 0.1 mm | less than 1% | None | Gap provision by jig |
| 10 mm | 0.1 mm | less than 1% | None | Gap provision by temporary assembly in spot welding |
| 10 mm | 0.1 mm | less than 1% | None | Gap provision by projection forming |
| 10 mm | 0.3 mm | less than 1% | None | Gap provision by projection forming |
| 5 mm | 0.0 mm | less than 1% | None | Corrugated sheet shape (R = 12 mm) |
| 5 mm | 0.0 mm | 9% | None | Corrugated sheet shape (R = 30 mm) |

In a case where welding was performed in a state in which some measure against a welding defect such as providing a gap between steel sheets was not taken, a large amount of pits and blow holes were generated and water leakage occurred.

When the jig was adjusted so that the gap between the steel sheets was 0.05 mm and 0.1 mm, the occurrence of blow holes and pits was greatly suppressed, and water leakage did not occur. Even when the gap between the steel sheets was adjusted to 0.1 mm at the time of overlapping by sheet separation when the vicinity of the corner portion of the flow path was subjected to resistance spot welding or a molded projection, the occurrence of blow hole and pit could be prevented, and water leakage did not occur. Although not shown in Table 2, a cooling structure having projections with a gap of 0.5 mm between the steel sheets was also prepared. Also in this cooling structure, blow holes and pits were prevented similarly to the flow path provided with other gaps, and no burning-through occurred, so that water leakage did not occur.

As illustrated in FIG. 3, when the press forming member was formed into a corrugated plate shape, generation of blow hole and pits was suppressed even when the gap between the plated steel sheets was 0 mm. When the radius of curvature R of the bank part at the contact section between the flow path upper lid and the bank part was 12 mm, the occurrence of blow holes and pits was prevented, and water leakage did not occur. When the radius R was 30 mm, a small amount of blow holes and pits were generated, but no water leakage occurred. In a case where a corrugated press forming member is used, the flow path interval becomes equal to the bead width, the flow path interval is narrowed, and a flow path with high cooling capacity can be manufactured.

As described above, the cooling structure in which the ratio of the length of the region where the blow hole and the pit were formed to the total length of the laser weld facing the flow path was 0.2 or less had excellent liquid tightness of the flow path. In addition, since the flow path intervals are narrowed in all the examples, high cooling efficiency can be exhibited when these are used for cooling of a battery cell or the like. In addition, since all examples were manufactured from Zn-based plated steel sheets, they have high cooling liquid corrosion resistance and outer surface corrosion resistance.

### [Brief Description of the Reference Symbols]

1 Cooling structure
11 Press forming member
111 Groove part
112 Bank part
12 Flow path upper lid
13 Laser weld
13A Flow path outer edge weld
131 Start position
132 End position
133 Middle portion
14 Flow path
141 Parallel flow path portion
1411 Partial flow path
142 Flow path connecting portion
143 Cooling liquid inlet
144 Cooling liquid outlet
15 Projection
16 Spot weld
2 Battery unit
21 Battery cell
22 Battery pack
23 Gap filler
R Circle indicating radius of curvature of bank part
P Pit
B Blow hole
T Tab plate
L Laser
D Interval between flow paths
W Width of flow path

## Claims

1. A cooling structure comprising:
a press forming member having a groove part and a bank part provided around the groove part;
a flow path upper lid which is a flat sheet overlapped at a position covering the groove part of the press forming member and forms a flat cooling surface; and
a laser weld which joins opposing surfaces of the flow path upper lid and the bank part to form a flow path through which a cooling liquid is capable of flowing, wherein
the press forming member and the flow path upper lid are plated steel sheets each including a base steel sheet, a Zn-based plating provided on a surface of the base steel sheet, and an inorganic film or a resin film provided as a chemical conversion coating film on a surface of the Zn-based plating,
the inorganic film contains a Si-based component or a Zr-based component in a proportion of 50 mass% or more,
the flow path includes a parallel flow path portion in which a plurality of partial flow paths extending along a first direction are arranged in a second direction orthogonal to the first direction,
in a part or all of the parallel flow path portions, an interval between the adjacent partial flow paths is 20 mm or less, and
a ratio of a length of a region in which a blow hole and a pit are formed to a total length of the laser weld facing the flow path is 0.2 or less.

2. The cooling structure according to claim 1, wherein in the parallel flow path portion, an interval between the adjacent partial flow paths is 0.8 to 15 mm.

3. The cooling structure according to claim 1 or 2, wherein a width of the partial flow path is 6 to 60 mm.

4. The cooling structure according to claim 1 or 2, wherein a width of the partial flow path is 6 to 20 mm.

5. The cooling structure according to any one of claims 1 to 4, wherein a gap between the press forming member and the flow path upper lid is 0.03 mm or more at a periphery of a weld metal included in the laser weld.

6. The cooling structure according to claim 5, further comprising:
a spacer having a thickness of 0.03 mm or more disposed between the press forming member and the flow path upper lid at the periphery of the weld metal included in the laser weld.

7. The cooling structure according to claim 6, wherein the spacer is a projection formed by deforming the flow path upper lid or the press forming member.

8. The cooling structure according to claim 5, further comprising:
a spot weld which joins the flow path upper lid and the press forming member to each other at the laser weld or in the vicinity of the laser weld.

9. The cooling structure according to any one of claims 1 to 8, wherein
a cross-sectional shape of the bank part is substantially an arc, and
a radius of curvature of the bank part at a contact section between the flow path upper lid and the bank part is 15 mm or less.

10. The cooling structure according to any one of claims 1 to 9, wherein the plated steel sheet forming the press forming member and the flow path upper lid has a sheet thickness of 0.3 to 1.2 mm.

11. The cooling structure according to any one of claims 1 to 10, wherein
the laser weld includes a flow path outer edge weld surrounding all the flow paths, and
a start position and an end position of the laser weld are excluded from the flow path outer edge weld.

12. The cooling structure according to any one of claims 1 to 11, wherein a start position and an end position of the laser weld are omitted from the cooling structure.

13. The cooling structure according to any one of claims 1 to 12, wherein a bead height of the laser weld in the flow path upper lid is 0.3 mm or less.

14. A battery unit comprising:
a battery cell;
a battery pack in which the battery cell is housed; and
the cooling structure according to any one of claims 1 to 13, wherein
the flow path upper lid of the cooling structure is joined to the battery pack.

15. A battery unit comprising:
a battery cell;
a battery pack in which the battery cell is housed; and
the cooling structure according to any one of claims 1 to 13, wherein
the flow path upper lid of the cooling structure is the battery pack.

16. A manufacturing method of a cooling structure comprising:
press-forming a steel sheet to obtain a press forming member having a groove part and a bank part provided around the groove part; and
overlapping a flow path upper lid which is a flat sheet at a position covering the groove part of the press forming member and laser welding the flow path upper lid and the bank part of the press forming member to obtain a laser weld which forms a flow path through which a cooling liquid is capable of flowing, wherein
the press forming member and the flow path upper lid are plated steel sheets each including a base steel sheet, a Zn-based plating provided on a surface of the base steel sheet, and an inorganic film or a resin film provided as a chemical conversion coating film on a surface of the Zn-based plating,
the inorganic film contains a Si-based component or a Zr-based component in a proportion of 50 mass% or more,
the flow path includes a parallel flow path portion in which a plurality of partial flow paths extending along a first direction are arranged in a second direction orthogonal to the first direction,
in a part or all of the parallel flow path portions, an interval between the adjacent partial flow paths is 20 mm or less, and
a ratio of a length of a region in which a blow hole and a pit are formed to a total length of the laser weld facing the flow path is 0.2 or less.

17. The manufacturing method of the cooling structure according to claim 16, wherein before the laser welding, a spacer having a thickness of 0.03 mm or more is disposed between the press forming member and the flow path upper lid at a portion to be subjected to the laser welding or in the vicinity of the portion to be subjected to the laser welding, so that a gap between the press forming member and the flow path upper lid at the portion to be subjected to the laser welding or in the vicinity of the portion to be subjected to the laser welding is 0.03 mm or more.

18. The manufacturing method of the cooling structure according to claim 17, wherein the spacer is a projection formed by deforming the flow path upper lid or the press forming member.

19. The manufacturing method of the cooling structure according to claim 16, wherein before the laser welding, the press forming member and the flow path upper lid are spotwelded at a portion to be subjected to the laser welding or in the vicinity of the portion to be subjected to the laser welding, so that a gap between the press forming member and the flow path upper lid at the portion to be subjected to the laser welding or in the vicinity of the portion to be subjected to the laser welding is 0.03 mm or more.
